# EUROPEAN PATENT APPLICATION

(11) **EP 3 747 633 A1**
(43) Date of publication of application: **09.12.2020**
(21) Application number: 19747651.8
(22) Date of filing: 29.01.2019
(51) Int. Cl.: B29C 64/153, B33Y 10/00, B33Y 30/00

(54) **PROCESSING DEVICE, PROCESSING METHOD, COMPUTER PROGRAM, RECORDING MEDIUM, AND CONTROL DEVICE**

(30) Priority: 31.01.2018 WO PCT/JP2018/003192
(71) Applicant: NIKON CORPORATION, Minato-ku Tokyo 108-6290 (JP)
(72) Inventor: MATSUDA, Takeshi, Tokyo 108-6290 (JP); NAGASAKA, Hiroyuki, Tokyo 108-6290 (JP); SHIRAISHI, Masayuki, Tokyo 108-6290 (JP); EGAMI, Shigeki, Tokyo 108-6290 (JP); YAMAMOTO, Takehiro, Tokyo 108-6290 (JP)
(74) Representative: Hoffmann Eitle
(86) International application number: PCT/JP2019/002953
(87) International publication number: WO 2019/151240

(57) **Abstract**

A processing apparatus is provided with: an irradiation apparatus that emits an energy beam; and a supply apparatus that supplies materials to an irradiation position of the energy beam, the processing apparatus forms a build object by moving the irradiation position from a first position on a first object to a second position that is away from the first object.

## Description

### Technical Field

The present invention relates to a processing apparatus, a processing method, a computer program, a recording medium and a control apparatus for forming a build object, for example.

### Background Art

A Patent Literature 1 discloses a build system that forms a build object by melting a powdery material with an energy beam and then solidifying the molten material again. A technical problem of the build system is to form the build object having a desired shape.

### Citation List

### Patent Literature

Patent Literature 1: US 2017/0014909A1

### Summary of Invention

A first aspect provides a processing apparatus that is provided with: an irradiation apparatus that emits an energy beam; and a supply apparatus that supplies powdery materials to an irradiation position of the energy beam, wherein the processing apparatus forms a first melt pool that faces to a first direction by irradiating a first object with the energy beam and forms a first build object at the first direction side of the first object by supplying the powdery materials to the first melt pool, and forms a second melt pool that faces to the first direction by irradiating the first build object with the energy beam and forms a second build object at the first direction side of the first build object by supplying the powdery materials to the second melt pool.

A second aspect provides a processing apparatus that is provided with: an irradiation apparatus that emits an energy beam; and a supply apparatus that supplies materials to an irradiation position of the energy beam, wherein the processing apparatus forms a build object by moving the irradiation position from a first position on a first object to a second position that is away from the first object.

A third aspect provides a processing apparatus that is provided with:
an irradiation apparatus that emits an energy beam; and a supply apparatus that supplies materials to an irradiation position of the energy beam, wherein the processing apparatus forms a first melt pool by irradiating a first object with the energy beam and forms a first build object that protrudes from the first object by supplying the materials to the first melt pool, and forms a second melt pool by irradiating the first build object with the energy beam and forms a second build object that protrudes from the first build object by supplying the materials to the second melt pool.

A fourth aspect provides a processing apparatus that is provided with: an irradiation apparatus that emits an energy beam; and a supply apparatus that supplies materials to an irradiation position of the energy beam, wherein the processing apparatus forms a first melt pool that faces to a first direction side by irradiating a first object with the energy beam and forms a first build object at the first direction side of the first object by supplying the materials to the first melt pool, and forms a second melt pool that faces to the first direction side by irradiating the first build object with the energy beam and forms a second build object at the first direction side of the first build object by supplying the materials to the second melt pool.

A fifth aspect provides a processing apparatus that is provided with: a supply apparatus that supplies materials; and an irradiation apparatus that irradiates a supply position of the materials with an energy beam, wherein the processing apparatus forms a build object by moving the supply position from a first position on a first object to a second position that is away from the first object.

A sixth aspect provides a processing apparatus that is provided with: an irradiation apparatus that emits an energy beam; and a supply apparatus that supplies materials to an irradiation position of the energy beam, wherein when the processing apparatus forms a build object at a first surface of a first object by irradiating the first object with the energy beam, the processing apparatus grows the build object toward a first direction that intersects with the first surface while emitting the energy beam.

A seventh aspect provides a processing apparatus that is provided with: an irradiation apparatus that emits an energy beam; and a supply apparatus that supplies materials to an irradiation position of the energy beam, wherein when the processing apparatus forms a build object at a first surface of a first object by irradiating the first object with the energy beam, the processing apparatus grows the build object toward a first direction including a direction component along a vertical direction while emitting the energy beam.

An eighth aspect provides a processing apparatus that is provided with: an irradiation apparatus that emits an energy beam; and a supply apparatus that supplies materials to an irradiation position of the energy beam, wherein when the processing apparatus forms a build object at a first surface of a first object by irradiating the first object with the energy beam, the processing apparatus grows the build object toward a first direction including a direction component that is against gravity while emitting the energy beam.

A ninth aspect provides a processing apparatus that is provided with: an irradiation apparatus that emits an energy beam; and a supply apparatus that supplies materials to an irradiation position of the energy beam, wherein when the processing apparatus forms a build object at a first surface of a first object by irradiating the first object with the energy beam, the processing apparatus changes a positional relationship between the first surface and the irradiation position in a first direction that intersects with the first surface while emitting the energy beam.

A tenth aspect provides a processing apparatus that is provided with: an irradiation apparatus that emits an energy beam to form a melt pool at an irradiation position of the energy beam; and a supply apparatus that supplies materials to the irradiation position, wherein when the processing apparatus forms a build object at a first surface of a first object by irradiating the first object with the energy beam, the processing apparatus changes a positional relationship between the first surface and the melt pool in a first direction that intersects with the first surface while emitting the energy beam.

A eleventh aspect provides a processing apparatus that is provided with: an irradiation apparatus that emits an energy beam; and a supply apparatus that supplies materials in accordance with the irradiation of the energy beam, wherein when the processing apparatus forms a build object at a first surface of a first object by irradiating the first object with the energy beam, the processing apparatus changes a positional relationship between the first surface and a supply position of the materials from the supply apparatus in a first direction that intersects with the first surface while emitting the energy beam.

A twelfth aspect provides a processing method including: irradiating an irradiation position with an energy beam; and supplying materials to the irradiation position, wherein the processing method forms a build object by moving the irradiation position from a first position on a first object to a second position that is away from the first object.

A thirteenth aspect provides a processing method including: emitting an energy beam; and supplying materials to an irradiation position of the energy beam, wherein the processing method forms a first melt pool by irradiating a first object with the energy beam and forms a first build object that protrudes from the first object by supplying the materials to the first melt pool, and forms a second melt pool by irradiating the first build object with the energy beam and forms a second build object that protrudes from the first build object by supplying the materials to the second melt pool.

A fourteenth aspect provides a processing method including: emitting an energy beam; and supplying materials to an irradiation position of the energy beam, wherein the processing method forms a first melt pool that faces to a first direction side by irradiating a first object with the energy beam and forms a first build object at the first direction side of the first object by supplying the materials to the first melt pool, and forms a second melt pool that faces to the first direction side by irradiating the first build object with the energy beam and forms a second build object at the first direction side of the first build object by supplying the materials to the second melt pool.

A fifteenth aspect provides a processing method including: supplying materials to a supply position; and irradiating the supply position with an energy beam, wherein the processing method forms a build object by moving the supply position from a first position on a first object to a second position that is away from the first object.

A sixteenth aspect provides a processing method including: emitting an energy beam; and supplying materials to an irradiation position of the energy beam, wherein when a build object is formed at a first surface of a first object by irradiating the first object with the energy beam, the processing method grows the build object toward a first direction that intersects with the first surface while emitting the energy beam.

A seventeenth aspect provides a processing method including: emitting an energy beam; and supplying materials to an irradiation position of the energy beam, wherein when a build object is formed at a first surface of a first object by irradiating the first object with the energy beam, the processing method grows the build object toward a first direction including a direction component along a vertical direction while emitting the energy beam.

A eighteenth aspect provides a processing method including: emitting an energy beam; and supplying materials to an irradiation position of the energy beam, wherein when a build object is formed at a first surface of a first object by irradiating the first object with the energy beam, the processing method grows the build object toward a first direction including a direction component that is against gravity while emitting the energy beam.

A nineteenth aspect provides a processing method including: emitting an energy beam; supplying materials to an irradiation position of the energy beam; and changing a positional relationship between a first surface of a first object and the irradiation position in a first direction that intersects with the first surface while emitting the energy beam, when a build object is formed at the first surface by irradiating the first object with the energy beam.

A twentieth aspect provides a processing method including: emitting an energy beam to form a melt pool at an irradiation position of the energy beam; supplying materials to the irradiation position of the energy beam; and changing a positional relationship between a first surface of a first object and the melt pool in a first direction that intersects with the first surface while emitting the energy beam, when a build object is formed at the first surface by irradiating the first object with the energy beam.

A twenty-first aspect provides a processing method including: emitting an energy beam; supplying materials in accordance with the irradiation of the energy beam; and changing a positional relationship between a first surface of a first object and a supply position of the materials in a first direction that intersects with the first surface while emitting the energy beam, when a build object is formed at the first surface by irradiating the first object with the energy beam.

A twenty-second aspect provides a processing apparatus that is provided with: an irradiation apparatus that emits an energy beam; a supply apparatus that supplies materials to an irradiation position of the energy beam; and a receiving apparatus that receives a control signal for controlling at least one of the irradiation apparatus and the supply apparatus to form a build object by moving the irradiation position from a first position on a first object to a second position that is away from the first object.

A twenty-third aspect provides a processing apparatus that is provided with: an irradiation apparatus that emits an energy beam; a supply apparatus that supplies materials to an irradiation position of the energy beam; and a receiving apparatus that receives a control signal for controlling at least one of the irradiation apparatus and the supply apparatus to form a first melt pool by irradiating a first object with the energy beam and to form a first build object that protrudes from the first object by supplying the materials to the first melt pool, and to form a second melt pool by irradiating the first build object with the energy beam and to form a second build object that protrudes from the first build object by supplying the materials to the second melt pool.

A twenty-fourth aspect provides a processing apparatus that is provided with: an irradiation apparatus that emits an energy beam; a supply apparatus that supplies materials to an irradiation position of the energy beam; and a receiving apparatus that receives a control signal for controlling at least one of the irradiation apparatus and the supply apparatus to form a first melt pool that faces to a first direction side by irradiating a first object with the energy beam and to form a first build object at the first direction side of the first object by supplying the materials to the first melt pool, and to form a second melt pool that faces to the first direction side by irradiating the first build object with the energy beam and form a second build object at the first direction side of the first build object by supplying the materials to the second melt pool.

A twenty-fifth aspect provides a processing apparatus that is provided with: a supply apparatus that supplies materials; an irradiation apparatus that irradiates a supply position of the materials with an energy beam; and a receiving apparatus that receives a control signal for controlling at least one of the irradiation apparatus and the supply apparatus to form a build object by moving the supply position from a first position on a first object to a second position that is away from the first object.

A twenty-sixth aspect provides a processing apparatus that is provided with: an irradiation apparatus that emits an energy beam; a supply apparatus that supplies materials to an irradiation position of the energy beam; and a receiving apparatus that receives a control signal for controlling at least one of the irradiation apparatus and the supply apparatus to grow a build object toward a first direction that intersects with a first surface of a first object while emitting the energy beam when the build object is formed at the first surface by irradiating the first object with the energy beam.

A twenty-seventh aspect provides a processing apparatus that is provided with: an irradiation apparatus that emits an energy beam; a supply apparatus that supplies materials to an irradiation position of the energy beam; and a receiving apparatus that receives a control signal for controlling at least one of the irradiation apparatus and the supply apparatus to grow a build object toward a first direction including a direction component along a vertical direction while emitting the energy beam when the build object is formed at a first surface of a first object by irradiating the first object with the energy beam.

A twenty-eighth aspect provides a processing apparatus that is provided with: an irradiation apparatus that emits an energy beam; a supply apparatus that supplies materials to an irradiation position of the energy beam; and a receiving apparatus that receives a control signal for controlling at least one of the irradiation apparatus and the supply apparatus to grow a build object toward a first direction including a direction component that is against gravity while emitting the energy beam when the build object is formed at a first surface of a first object by irradiating the first object with the energy beam.

A twenty-ninth aspect provides a processing apparatus that is provided with: an irradiation apparatus that emits an energy beam; a supply apparatus that supplies materials to an irradiation position of the energy beam; and a receiving apparatus that receives a control signal for controlling at least one of the irradiation apparatus and the supply apparatus to change a positional relationship between a first surface of a first object and the irradiation position in a first direction that intersects with the first surface while emitting the energy beam, when a build object is formed at the first surface by irradiating the first object with the energy beam.

A thirtieth aspect provides a processing apparatus that is provided with: an irradiation apparatus that emits an energy beam to form a melt pool at an irradiation position of the energy beam; a supply apparatus that supplies materials to the irradiation position; and a receiving apparatus that receives a control signal for controlling at least one of the irradiation apparatus and the supply apparatus to change a positional relationship between a first surface of a first object and the melt pool in a first direction that intersects with the first surface while emitting the energy beam, when a build object is formed at the first surface by irradiating the first object with the energy beam.

A thirty-first aspect provides a processing apparatus that is provided with: an irradiation apparatus that emits an energy beam; a supply apparatus that supplies materials in accordance with the irradiation of the energy beam; and a receiving apparatus that receives a control signal for controlling at least one of the irradiation apparatus and the supply apparatus to change a positional relationship between a first surface of a first object and a supply position of the materials from the supply apparatus in a first direction that intersects with the first surface while emitting the energy beam, when a build object is formed at the first surface by irradiating the first object with the energy beam.

A thirty-second aspect provides a computer program that is executed by a computer for controlling a processing apparatus, the processing apparatus is provided with: an irradiation apparatus that emits an energy beam; and a supply apparatus that supplies materials to an irradiation position of the energy beam, the computer program allows the computer to execute a process to form a build object by moving the irradiation position from a first position on a first object to a second position that is away from the first object.

A thirty-third aspect provides a computer program that is executed by a computer for controlling a processing apparatus, the processing apparatus is provided with: an irradiation apparatus that emits an energy beam; and a supply apparatus that supplies materials to an irradiation position of the energy beam, the computer program allows the computer to execute a process to form a first melt pool by irradiating a first object with the energy beam and to form a first build object that protrudes from the first object by supplying the materials to the first melt pool, and to form a second melt pool by irradiating the first build object with the energy beam and to form a second build object that protrudes from the first build object by supplying the materials to the second melt pool.

A thirty-fourth aspect provides a computer program that is executed by a computer for controlling a processing apparatus, the processing apparatus is provided with: an irradiation apparatus that emits an energy beam; and a supply apparatus that supplies materials to an irradiation position of the energy beam, the computer program allows the computer to execute a process to form a first melt pool that faces to a first direction side by irradiating a first object with the energy beam and to form a first build object at the first direction side of the first object by supplying the materials to the first melt pool, and to form a second melt pool that faces to the first direction side by irradiating the first build object with the energy beam and form a second build object at the first direction side of the first build object by supplying the materials to the second melt pool.

A thirty-fifth aspect provides a computer program that is executed by a computer for controlling a processing apparatus, the processing apparatus is provided with: a supply apparatus that supplies materials; and an irradiation apparatus that irradiates a supply position of the materials with an energy beam, the computer program allows the computer to execute a process to form a build object by moving the supply position from a first position on a first object to a second position that is away from the first object.

A thirty-sixth aspect provides a computer program that is executed by a computer for controlling a processing apparatus, the processing apparatus is provided with: an irradiation apparatus that emits an energy beam; and a supply apparatus that supplies materials to an irradiation position of the energy beam, the computer program allows the computer to execute a process to grow a build object toward a first direction that intersects with a first surface of a first object while emitting the energy beam when the build object is formed at the first surface by irradiating the first object with the energy beam.

A thirty-seventh aspect provides a computer program that is executed by a computer for controlling a processing apparatus, the processing apparatus is provided with: an irradiation apparatus that emits an energy beam; a supply apparatus that supplies materials to an irradiation position of the energy beam; and the computer program allows the computer to execute a process to grow a build object toward a first direction including a direction component along a vertical direction while emitting the energy beam when the build object is formed at a first surface of a first object by irradiating the first object with the energy beam.

A thirty-eighth aspect provides a computer program that is executed by a computer for controlling a processing apparatus, the processing apparatus is provided with: an irradiation apparatus that emits an energy beam; and a supply apparatus that supplies materials to an irradiation position of the energy beam, the computer program allows the computer to execute a process to grow a build object toward a first direction including a direction component that is against gravity while emitting the energy beam when the build object is formed at a first surface of a first object by irradiating the first object with the energy beam.

A thirty-ninth aspect provides a computer program that is executed by a computer for controlling a processing apparatus, the processing apparatus is provided with: an irradiation apparatus that emits an energy beam; and a supply apparatus that supplies materials to an irradiation position of the energy beam, the computer program allows the computer to execute a process to change a positional relationship between a first surface of a first object and the irradiation position in a first direction that intersects with the first surface while emitting the energy beam, when a build object is formed at the first surface by irradiating the first object with the energy beam.

A fortieth aspect provides a computer program that is executed by a computer for controlling a processing apparatus, the processing apparatus is provided with: an irradiation apparatus that emits an energy beam to form a melt pool at an irradiation position of the energy beam; and a supply apparatus that supplies materials to the irradiation position, the computer program allows the computer to execute a process to change a positional relationship between a first surface of a first object and the melt pool in a first direction that intersects with the first surface while emitting the energy beam, when a build object is formed at the first surface by irradiating the first object with the energy beam.

A forty-first aspect provides a computer program that is executed by a computer for controlling a processing apparatus, the processing apparatus is provided with: an irradiation apparatus that emits an energy beam; and a supply apparatus that supplies materials in accordance with the irradiation of the energy beam, the computer program allows the computer to execute a process to change a positional relationship between a first surface of a first object and a supply position of the materials from the supply apparatus in a first direction that intersects with the first surface while emitting the energy beam, when a build object is formed at the first surface by irradiating the first object with the energy beam.

A forty-second aspect provides a recording medium on which the computer program provided by any one of the thirty-second aspect to the forty-first aspect as described above is recorded.

A forty-third aspect provides a control apparatus that controls a processing apparatus, the processing apparatus is provided with: an irradiation apparatus that emits an energy beam; and a supply apparatus that supplies materials to an irradiation position of the energy beam, the control apparatus executes a process to form a build object by moving the irradiation position from a first position on a first object to a second position that is away from the first object.

A forty-fourth aspect provides a control apparatus that controls a processing apparatus, the processing apparatus is provided with: an irradiation apparatus that emits an energy beam; and a supply apparatus that supplies materials to an irradiation position of the energy beam, the control apparatus executes a process to form a first melt pool by irradiating a first object with the energy beam and to form a first build object that protrudes from the first object by supplying the materials to the first melt pool, and to form a second melt pool by irradiating the first build object with the energy beam and to form a second build object that protrudes from the first build object by supplying the materials to the second melt pool.

A forty-fifth aspect provides a control apparatus that controls a processing apparatus, the processing apparatus is provided with: an irradiation apparatus that emits an energy beam; and a supply apparatus that supplies materials to an irradiation position of the energy beam, the control apparatus executes a process to form a first melt pool that faces to a first direction side by irradiating a first object with the energy beam and to form a first build object at the first direction side of the first object by supplying the materials to the first melt pool, and to form a second melt pool that faces to the first direction side by irradiating the first build object with the energy beam and form a second build object at the first direction side of the first build object by supplying the materials to the second melt pool.

A forty-sixth aspect provides a control apparatus that controls a processing apparatus, the processing apparatus is provided with: a supply apparatus that supplies materials; and an irradiation apparatus that irradiates a supply position of the materials with an energy beam, the control apparatus executes a process to form a build object by moving the supply position from a first position on a first object to a second position that is away from the first object.

A forty-seventh aspect provides a control apparatus that controls a processing apparatus, the processing apparatus is provided with: an irradiation apparatus that emits an energy beam; and a supply apparatus that supplies materials to an irradiation position of the energy beam, the control apparatus executes a process to grow a build object toward a first direction that intersects with a first surface of a first object while emitting the energy beam when the build object is formed at the first surface by irradiating the first object with the energy beam.

A forty-eighth aspect provides a control apparatus that controls a processing apparatus, the processing apparatus is provided with: an irradiation apparatus that emits an energy beam; a supply apparatus that supplies materials to an irradiation position of the energy beam; and the control apparatus executes a process to grow a build object toward a first direction including a direction component along a vertical direction while emitting the energy beam when the build object is formed at a first surface of a first object by irradiating the first object with the energy beam.

A forty-ninth aspect provides a control apparatus that controls a processing apparatus, the processing apparatus is provided with: an irradiation apparatus that emits an energy beam; and a supply apparatus that supplies materials to an irradiation position of the energy beam, the control apparatus executes a process to grow a build object toward a first direction including a direction component that is against gravity while emitting the energy beam when the build object is formed at a first surface of a first object by irradiating the first object with the energy beam.

A fiftieth aspect provides a control apparatus that controls a processing apparatus, the processing apparatus is provided with: an irradiation apparatus that emits an energy beam; and a supply apparatus that supplies materials to an irradiation position of the energy beam, the control apparatus executes a process to change a positional relationship between a first surface of a first object and the irradiation position in a first direction that intersects with the first surface while emitting the energy beam, when a build object is formed at the first surface by irradiating the first object with the energy beam.

A fifty-first aspect provides a control apparatus that controls a processing apparatus, the processing apparatus is provided with: an irradiation apparatus that emits an energy beam to form a melt pool at an irradiation position of the energy beam; and a supply apparatus that supplies materials to the irradiation position, the control apparatus executes a process to change a positional relationship between a first surface of a first object and the melt pool in a first direction that intersects with the first surface while emitting the energy beam, when a build object is formed at the first surface by irradiating the first object with the energy beam.

A fifty-second aspect provides a control apparatus that controls a processing apparatus, the processing apparatus is provided with: an irradiation apparatus that emits an energy beam; and a supply apparatus that supplies materials in accordance with the irradiation of the energy beam, the control apparatus executes a process to change a positional relationship between a first surface of a first object and a supply position of the materials from the supply apparatus in a first direction that intersects with the first surface while emitting the energy beam, when a build object is formed at the first surface by irradiating the first object with the energy beam.

An operation and another advantage of the above described aspect will be apparent from an embodiment described below.

### Brief Description of Drawings

[FIG. 1] FIG. 1 is a block diagram that illustrates a structure of a build system in the present embodiment.
[FIG. 2] FIG. 2 is a side view that illustrates a structure of a build apparatus of the build system in the present embodiment (note that a part thereof is a cross-sectional view for the purpose of clear illustration).
[FIG. 3] Each of FIG. 3A to FIG. 3C is a cross-sectional view that illustrates an aspect in which a build surface is irradiated with a light and build materials are supplied thereto.
[FIG. 4] Each of FIG. 4A to FIG. 4C is a cross-sectional view that illustrates a process for forming a three-dimensional structural object by a first build operation.
[FIG. 5] Each of FIG. 5A to FIG. 5E is a cross-sectional view that illustrates a process for forming an extending structural object by a second build operation.
[FIG. 6] Each of FIG. 6A to FIG. 6D is a cross-sectional view that illustrates a process for forming the extending structural object by the second build operation.
[FIG. 7] Each of FIG. 7A to FIG. 7D is a cross-sectional view or a perspective view that illustrates one example of the extending structural object formed by the second build operation.
[FIG. 8] Each of FIG. 8A to FIG. 8F is a cross-sectional view or a perspective view that illustrates one example of the extending structural object formed by the second build operation.
[FIG. 9] Each of FIG. 9A to FIG. 9D is a cross-sectional view or a perspective view that illustrates one example of the extending structural object formed by the second build operation.
[FIG. 10] Each of FIG. 10A to FIG. 10D is a cross-sectional view or a perspective view that illustrates one example of the extending structural object formed by the second build operation.
[FIG. 11] FIG. 11 is a perspective view that illustrates one example of the three-dimensional structural object formed by the second build operation.
[FIG. 12] Each of FIG. 12A and FIG. 12B is a side view that illustrates a structure of a build apparatus in a first modified example (note that a part thereof is a cross-sectional view for the purpose of clear illustration).
[FIG. 13] FIG. 13 is a cross-sectional view that illustrates a process for forming the three-dimensional structural object by the second build operation in a second modified example.
[FIG. 14] FIG. 14 is a cross-sectional view that illustrates a process for forming the three-dimensional structural object by the second build operation in a second modified example.
[FIG. 15] FIG. 15 is a cross-sectional view that illustrates a process for forming the three-dimensional structural object by the second build operation in a second modified example.
[FIG. 16] FIG. 16 is a cross-sectional view that illustrates a process for forming the three-dimensional structural object by the second build operation in a second modified example.
[FIG. 17] FIG. 17 is a cross-sectional view that illustrates a process for forming the three-dimensional structural object by the second build operation in a second modified example.
[FIG. 18] FIG. 18 is a cross-sectional view that illustrates a process for forming the three-dimensional structural object by the second build operation in a second modified example.
[FIG. 19] FIG. 19 is a cross-sectional view that illustrates a process for forming the three-dimensional structural object by the second build operation in a second modified example.
[FIG. 20] FIG. 20 is a cross-sectional view that illustrates a process for forming the three-dimensional structural object by the second build operation in a second modified example.
[FIG. 21] FIG. 21 is diagram that illustrates a structure of the built three-dimensional structural object.
[FIG. 22] FIG. 22 is diagram that illustrates a structure of the built three-dimensional structural object.

### Description of Embodiments

Next, with reference to drawings, embodiments of a processing apparatus and a processing method will be described. In the below described description, the embodiments of a processing apparatus and a processing method will be described by using a build system 1 that is configured to form a three-dimensional structural object ST by performing an additive processing using build materials M by a LMD (Laser Metal Deposition). Note that the Laser Metal Deposition may be referred to as a Direct Metal Deposition, a Direct Energy Deposition, a Laser Cladding, a Laser Engineered Net Shaping, a Direct Light Fabrication, a Laser Consolidation, a Shape Deposition Manufacturing, a Wire Feed Laser Deposition, a Gas Through Wire, a Laser Powder Fusion, a Laser Metal Forming, a Selective Laser Powder Re-melting, a Laser Direct Casting, a Laser Powder Deposition, a Laser Additive Manufacturing or a Laser Rapid Forming.

Moreover, in the below described description, a positional relationship of various components that constitute the build system 1 will be described by using an XYZ rectangular coordinate system that is defined by a X axis, a Y axis and a Z axis that are perpendicular to one another. Note that each of an X axis direction and a Y axis direction is assumed to be a horizontal direction (namely, a predetermined direction in a horizontal plane) and a Z axis direction is assumed to be a vertical direction (namely, a direction that is perpendicular to the horizontal plane, and substantially an up-down direction or a gravity direction), for the purpose of simple description. Moreover, rotational directions (in other words, inclination directions) around the X axis, the Y axis and the Z axis are referred to as a θX direction, a θY direction and a θZ direction, respectively. Here, the Z axis direction may be the gravity direction. An XY plane may be a horizontal direction.

### (1) Structure of Build System 1

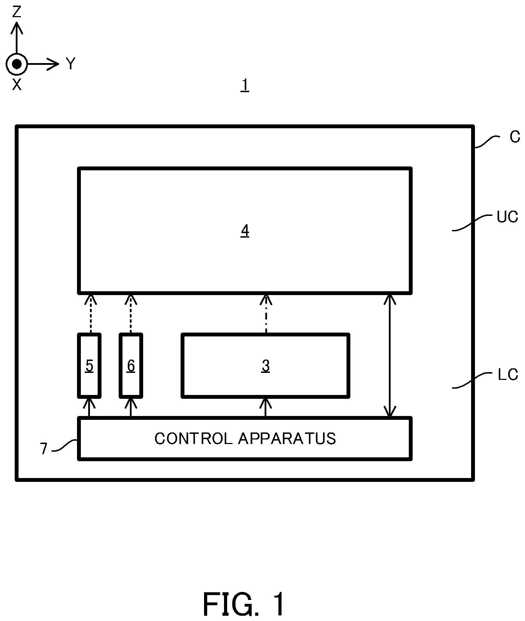

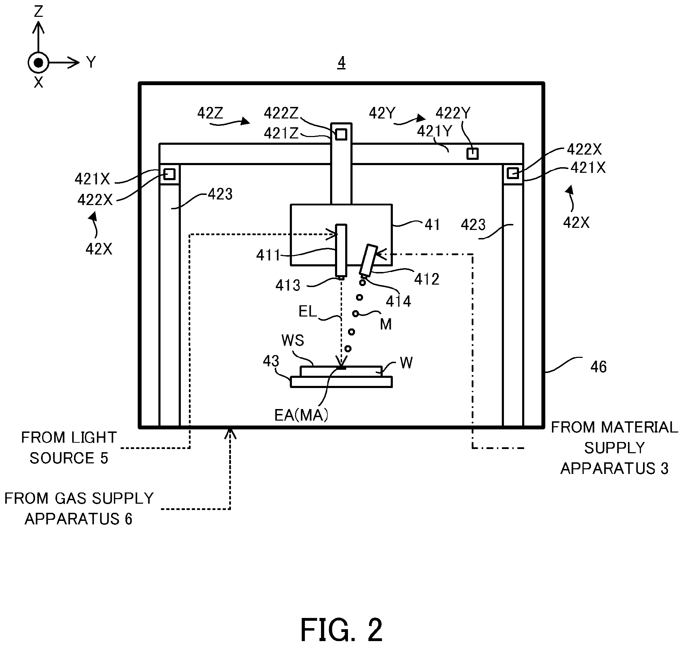

Firstly, with reference to FIG. 1 and FIG. 2, an entire structure of the build system 1 in the present embodiment will be described. FIG. 1 is a cross-sectional view that illustrates one example of the structure of the build system 1 in the present embodiment. FIG. 2 is a cross-sectional view that illustrates the structure of a build apparatus 4 of the build system 1 in the present embodiment.

The build system 1 is configured to form the three-dimensional structural object ST (namely, a three-dimensional object having a size in each of three-dimensional directions, and a solid object, in other words, an object having a size in X, Y and Z directions). The build system 1 is configured to form the three-dimensional structural object ST on a workpiece W that is a base (namely, a base member) for forming the three-dimensional structural object ST. The build system 1 is configured to form the three-dimensional structural object ST by performing the additive processing on the workpiece W. When the workpiece W is a below described stage 43, the build system 1 is configured to form the three-dimensional structural object ST on the stage 43. When the workpiece W is an existing structural object held by the stage 43, the build system 1 is configured to form the three-dimensional structural object ST on the existing structural object. In this case, the build system 1 may form the three-dimensional structural object ST that is integrated with the existing structural object. An operation for forming the three-dimensional structural object ST that is integrated with the existing structural object is equivalent to an operation for adding a new structural object to the existing structural object. Alternatively, the build system 1 may form the three-dimensional structural object ST that is separable from the existing structural object. Note that FIG. 2 illustrates an example in which the workpiece W is an existing structural object held by the stage 43. The below described description also uses the example in which the workpiece W is an existing structural object held by the stage 43.

As described above, the build system 1 is configured to form the three-dimensional structural object ST by the Laser Metal Deposition. Namely, it can be said that the build system 1 is a 3D printer that forms an object by using an Additive layer manufacturing technique. Note that the Additive layer manufacturing technique may be referred to as a Rapid Prototyping, a Rapid Manufacturing or an Additive Manufacturing.

In order to form the three-dimensional structural object ST, the build system 1 is provided with a material supply apparatus 3, a build apparatus 4, a light source 5, a gas supply apparatus 6 and a control apparatus 7, as illustrated in FIG. 1. The material supply apparatus 3, the build apparatus 4, the light source 5, the gas supply apparatus 6 and the control apparatus 7 are housed in a housing C. In an example illustrated in FIG. 1, the build apparatus 4 is housed in an upper space UC of the housing C and the material supply apparatus 3, the light source 5, the gas supply apparatus 6 and the control apparatus 7 are housed in a lower space LC of the housing C that is located below the upper space UC. However, an arranged position in the housing C of each of the material supply apparatus 3, the build apparatus 4, the light source 5, the gas supply apparatus 6 and the control apparatus 7 is not limited to an arranged position illustrated in FIG. 1.

The material supply apparatus 3 supplies build materials M to the build apparatus 4. The material supply apparatus 3 supplies, from the material supply apparatus 3 to the build apparatus 4, the build materials M the amount of which is necessary for the build apparatus 4 to form the three-dimensional structural object ST per unit time by supplying the build materials M at a desired supply rate that is based on the necessary amount.

The build material M is a material that is molten by an irradiation of a light EL having a predetermine intensity or more intensity. At least one of a metal material and a resin material is usable as the build material M, for example. However, another material that is different from the metal material and the resin material may be used as the build material M. The build materials M are powder-like or grain-like materials. Namely, the build materials M are powdery or granular materials. However, the build materials M may not be the powdery or granular materials, and a wire-like build materials or a gas-like material may be used, for example. Note that the build apparatus 4 may form a build object by processing the build materials M with an energy beam such as charged particle beam.

The build apparatus 4 forms the three-dimensional structural object ST by processing the build materials M supplied from the material supply apparatus 3. In order to form the three-dimensional structural object ST, as illustrated in FIG. 2, the build apparatus 4 is provided with a build head 41, a head driving system 42 and the stage 43. Moreover, the build head 41 is provided with an irradiation system 411 and a material nozzle 412 (namely, a supply system that supplies the build materials M). The build head 41, the driving system 42 and the stage 43 are housed in a chamber 46.

The irradiation system 411 is an optical system (for example, a condensing optical system) for emitting the light EL from an emitting part 413. Specifically, the irradiation system 411 is optically connected to the light source 5 that generates the light EL through a non-illustrated light transmitting member such as an optical fiber and light pipe. The irradiation system 411 emits the light EL transmitted from the light source 5 through the light transmitting member. The irradiation system 411 emits the light EL in a downward direction (namely, toward a -Z side) from the irradiation system 411. The stage 43 is disposed below the irradiation system 411. When the workpiece W is loaded on the stage 43, the irradiation system 411 is configured to emit the light EL toward the workpiece W. Specifically, the irradiation system 411 irradiates an irradiation area EA that is set as an area that is irradiated with the light EL so that the light EL is condensed at the irradiation area EA. Moreover, a state of the irradiation system 411 is switchable between a state where the light EL is emitted and a state where the light EL is not emitted under the control of the control apparatus 7. Note that a direction of the light EL emitted from the irradiation system 411 is not limited to a vertical downward direction (namely, coincident with the -Z axis direction), and may be a direction that is inclined with respect to the Z axis by a predetermined angle, for example.

The material nozzle 412 has a supply outlet 414 that supplies the build materials M. The material nozzle 412 supplies (specifically, injects, blows out or emits) the build materials M from the supply outlet 414 along a material supply path. The material nozzle 412 is physically connected to the material supply apparatus 3 that is a supply source of the build materials M through a non-illustrated powdery material transporting member such as a pipe. The material nozzle 412 supplies the build materials M supplied from the material supply apparatus 3 through the powdery material transporting member. Note that the material nozzle 412 is illustrated to have a tube-like shape in FIG. 2, however, the shape of the material nozzle 412 is not limited to this shape. The material nozzle 412 supplies the build materials M in a downward direction (namely, toward the -Z side) from the material nozzle 412. The stage 43 is disposed below the material nozzle 412. When the workpiece W is loaded on the stage 43, the material nozzle 412 supplies the build materials M toward the workpiece W. Note that although a moving direction of the build materials M supplied from the material nozzle 41 is a direction that is inclined with respect to the Z axis by a predetermined angle (as one example, an acute angle), it may be the -Z axis direction (namely, a vertical downward direction).

In the present embodiment, the material nozzle 412 is aligned to the irradiation system 411 so as to supply the build materials M to an irradiation position of the light EL by the irradiation system 411. The material nozzle 412 is aligned to the irradiation system 411 so as to supply the build materials M to the irradiation area EA that is irradiated with the light EL by the irradiation system 411. Namely, the material nozzle 412 is aligned to the irradiation system 411 so that the irradiation area EA is coincident with (alternatively, at least partially overlaps with) a supply area MA that is set as an area to which the material nozzle 412 supplies the build materials M. Note that the material nozzle 412 may aligned so as to supply the build materials M to a below described melt pool MP that is formed by the light EL emitted from the irradiation system 411. The material nozzle 412 may aligned so that the supply area MA to which the build materials M are supplied overlaps with an area of the melt pool MP.

The head driving system 42 moves the build head 41. In order to move the build head 41, the head driving system 42 is provided with a head driving system 42X, a head driving system 42Y and a head driving system 42Z. The head driving system 42X moves the build head 41 along the X axis. The head driving system 42Y moves the build head 41 along the Y axis. The head driving system 42Z moves the build head 41 along the Z axis. Namely, the head driving system 42 moves the build head 41 along each of the X axis, the Y axis and the Z axis. When the build head 41 moves along the X axis, the irradiation area EA and the supply area MA move along the X axis. When the build head 41 moves along the Y axis, the irradiation area EA and the supply area MA move along the Y axis. When the build head 41 moves along the Z axis, the irradiation area EA and the supply area MA move along the Z axis. Note that the head driving system 42 may move (may rotate) along a θX axis, a θY axis and a θZ axis in addition to or instead of at least one of the X axis, the Y axis and the Z axis.

Each of the head driving system 42X, the head driving system 42Y and the head driving system 42Z is a driving system including a motor, for example, however, may be a driving system including another actuator (alternatively, a driving source). The head driving system 42X is provided with: a X guide part 421X that extends along the X axis and that is fixed to a support frame 423 disposed at a bottom surface of the chamber 46 through a vibration isolator such as an air spring; and a motor 422X. The head driving system 42Y is provided with: the Y guide part 421Y that extends along the Y axis; and a motor 422Y. The head driving system 42Z is provided with: the Z guide part 421Z that extends along the Z axis; and a motor 422Z. When the motor 422X is driven, the Y guide part 421Y (furthermore, the build head 41 that is connected to the Y guide part 421Y through the Z guide part 421Z) moves along the X guide part 421X (namely, along the X axis). When the motor 422Y is driven, the Z guide part 421Z (furthermore, the build head 41 that is connected to the Z guide part 421Z) moves along the Y guide part 421Z (namely, along the Y axis). When the motor 422Z is driven, the build head 41 moves along the Z guide part 421Z (namely, along the Z axis). Note that the vibration isolator may not be used._

The stage 43 is configured to hold the workpiece W. Moreover, the stage 43 is configured to release the held workpiece W. The above described irradiation system 411 emits the light EL in at least a part of a period when the stage 43 holds the workpiece W. Moreover, the above described material nozzle 412 supplies the build materials M in at least a part of the period when the stage 43 holds the workpiece W. Note that there is a possibility that a part of the build materials M supplied by the material nozzle 412 is scattered or drops outside the workpiece W (for example, around the stage 43) from a surface of the workpiece W. Thus, the build system 1 may be provided with a collecting apparatus that collects the build material M scattered or dropping around the stage 43. Note that the stage 43 may be provided with at least one of a mechanical chuck, a vacuum chuck, an electromagnetic chuck and electrostatic chuck and the like in order to hold the workpiece W.

Again in FIG. 1, the light source 5 emits, as the light EL, at least one of an infrared light, a visible light and an ultraviolet light, for example. However, another type of light may be used as the light EL. The light EL is a laser light. In this case, the light source 5 may include a semiconductor laser such as a laser light source (for example, a Laser Diode (LD)). The laser light source may be a fiber laser, a CO₂ laser, a YAG laser, an Excimer laser or the like. However, the light EL may not be the laser light and the light source 5 may include any light source (for example, at least one of a LED (Light Emitting Diode), a discharge lamp, a EUV (Extreme Ultra Violet) light source and the like). Moreover, an energy source that emits the energy beam such as the charged particle beam may be used in addition to or instead of the optical source 5.

The gas supply apparatus 6 is a supply source of inert gas. Nitrogen gas or Argon gas is one example of the inert gas. The gas supply apparatus 6 supplies the inert gas into the chamber 46 of the build apparatus 4. As a result, an inner space of the chamber 46 is a space that is purged by the inert gas. Note that the gas supply apparatus 6 may be a tank that stores the inert gas such as the Nitrogen gas or the Argon gas, and may be a Nitrogen gas generation apparatus that generates the Nitrogen gas by using air as material when the inert gas is the Nitrogen gas.

The control apparatus 7 controls an operation of the build system 1. The control apparatus 7 may include a calculation apparatus such as at least one of a CPU (Central Processing Unit), a GPU (Graphic Processing Unit) and the like and a storage apparatus such as a memory, for example. The control apparatus 7 serves as an apparatus for controlling the operation of the build system 1 by means of the calculation apparatus executing a computer program. The computer program is a computer program that allows the control apparatus 7 (for example, the calculation apparatus) to execute (namely, to perform) a below described operation that should be executed by the control apparatus 7. Namely, the computer program is a computer program that allows the control apparatus 7 to function so as to make the build system 1 execute the below described operation. The computer program executed by the calculation apparatus may be recorded in the storage apparatus (namely, a recording medium) of the control apparatus 7, or may be recorded in any recording medium (for example, a hard disk or a semiconductor memory) that is built in the control apparatus 7 or that is attachable to the control apparatus 7. Alternatively, the calculation apparatus may download the computer program that should be executed from an apparatus disposed outside the control apparatus 7 through a network interface. Note that the recording medium recording therein the computer program that is executed by the calculation apparatus may include a magnetic medium such as a magnetic disc or a magnetic tape, an optical disc, an optical-magnetic disc including a CD-ROM, a CD-R, a CD-RW, a flexible disc, a MO, a DVD-ROM, a DVD-RAM, a DVD-R, a DVD+R, a DVD-RW, a DVD+RW or a Blu-ray (registered trademark), a semiconductor memory such as a USB memory, and another medium that is configured to store the program. Moreover, the program includes not only the program that is stored in the above described recording medium and distributed but also a program that is distributed by a download through a network line such as an Internet and the like. Moreover, the recording medium includes a device that is configured to record the program and a device for universal use or exclusive use in which the above described program is embedded to be executable in a form of a software, a firmware or the like, for example. Moreover, various processes or functions included in the program may be executed by a program software that is executable by the computer or the process of each part may be realized by a hardware such as a predetermined gate array (a FPGA, an ASIC) or in a form in which a program software module and a partial hardware module that realizes an partial element of the hardware are combined.

Especially in the present embodiment, the control apparatus 7 controls an emitting aspect of the light EL by the irradiation system 411. The emitting aspect includes at least one of an intensity of the light EL and an emitting timing of the light EL. When the light EL is a pulse light, the emitting aspect may include at least one of a length of an ON time of the pulse light and a ratio (a duty ratio) of the ON time to an OFF time of the light EL. Moreover, the control apparatus 7 controls a moving aspect of the build head 41 by the head driving system 42. The moving aspect includes at least one of a moving distance, a moving speed, a moving direction and a moving timing. Moreover, the control apparatus 7 controls a supplying aspect of the build materials M by the material supply apparatus 3. The supplying aspect includes a supplied amount (especially, a supplied amount per unit time). Note that the control apparatus 7 may not be disposed in the build system 1, and may be disposed outside the build system 1 as the server and the like.

The control apparatus 7 may not be disposed in the build system 1, and may be disposed outside the build system 1 as a server and the like. In this case, the control apparatus 7 may be connected to the build system 1 through a wired or a wireless communication line or a network. When they are physically connected through a wired line, a serial connection such as IEEE1394, RS-232x, RS-422, RS-423, RS-485 and USB, a parallel connection or an electric connection through a network such as 10-BASE-T, 100BASE-TX or 1000BASE-T may be used. When they are connected through a wireless line, a wireless LAN such as IEEE802.1x or OFDM, an electrical wave such as Bluetooth (registered trademark), an infrared ray, an optical communication or the like may be used. In this case, the control apparatus 7 and the build system 1 may be configured to transmit and receive various information through the communication line or the network. Moreover, the control apparatus 7 may be configured to transmit an information such as a command and a control parameter to the build system 1 through the above described communication line or the network. The build system 1 may be provided with a receiving apparatus that receives the information such as the command and the control parameter from the control apparatus 7 through the above described communication line or the network.

### (2) Operation of Build System 1

Next, a build operation for forming the three-dimensional structural object ST by the modeling system 1 will be described. The build system 1 forms the three-dimensional structural object ST on the basis of a three-dimensional model data or the like (for example, a CAD (Computer Aided Design) data) of the three-dimensional structural object ST that should be formed. The three-dimensional model data includes a data that represents a shape (especially, a three-dimensional shape) of the three-dimensional structural object ST. A measured data of the solid object measured by a non-illustrated measurement apparatus disposed in the build system 1 may be used as the three-dimensional model data. A measured data by a three-dimensional shape measurement device disposed separately from the build system 1 may be used as the three-dimensional model data. At least one of a contact-type of three-dimensional measurement device having a probe that is movable relative to the workpiece W and is allowed to contact the workpiece W and a non-contact-type of three-dimensional measurement device is one example of the three-dimensional shape measurement device. A Pattern Projection type of three-dimensional measurement device, a Light Section type of three-dimensional measurement device, a Time Of Flight type of three-dimensional measurement device, a Moire Topography type of three-dimensional measurement device, a Holographic Interference type of three-dimensional measurement device, a CT (Computed Tomography) type of three-dimensional measurement device and a MRI (Magnetic Resonance Imaging) type of three-dimensional measurement device and the like) is one example of the non-contact-type of three-dimensional measurement device. A design data of the three-dimensional structural object ST may be used as the three-dimensional model data.

In the present embodiment, the build system 1 may perform a first build operation for forming the three-dimensional object ST by sequentially forms a plurality of layered partial structural objects (it is referred to as a "structural layer" in the below described description) SL that are arranged along a direction intersecting with a build surface CS on which the three-dimensional structural object ST should be formed. Note that the build surface CS may be set on at least a part of a workpiece surface WS that is an upper surface (namely, a surface facing to the +Z side) of the workpiece W, and may be set on a surface of the existing structural object (for example, the structural layer SL) formed on the workpiece surface WS. The build system 1 may perform, in addition to or instead of the first build operation, a second build operation for forming the three-dimensional structural object ST by forming an extending structural object SP that extends (in other words, becomes extended, stretches, becomes stretched, elongates, becomes elongated, protrudes, projects, is bunched, is raised, is convex, distends, bulges or is distended) in a direction that intersects with the build surface CS. Next, the first build operation and the second build operation will be described in order.

### (2-1) First Build Operation

Firstly, the first build operation will be described. The build system 1 performing the first build operation forms, one by one in order, the plurality of structural layers SL that are obtained by slicing the three-dimensional structural object ST along a direction that is perpendicular to the build surface CS. As a result, the three-dimensional structural object ST that is a layered structural body in which the plurality of structural layers SL are laminated is formed. Next, a flow of an operation for forming the three-dimensional structural object ST by forming the plurality of structural layers SL one by one in order will be described.

Note that the build surface CS is regarded as a surface along the XY plane for the purpose of simple description in the following description. Thus, in the following description, the first build operation for forming the three-dimensional structural object ST in which the plurality of structural layers SL are laminated along the Z axis direction by forming, one by one in order, the plurality of structural layers SL that are obtained by slicing the three-dimensional structural object ST along the Z axis direction. However, the build surface CS may be a surface that is inclined with respect to the XY plane, and may be a surface (namely, a plane including the Z axis) that is perpendicular to the XY plane.

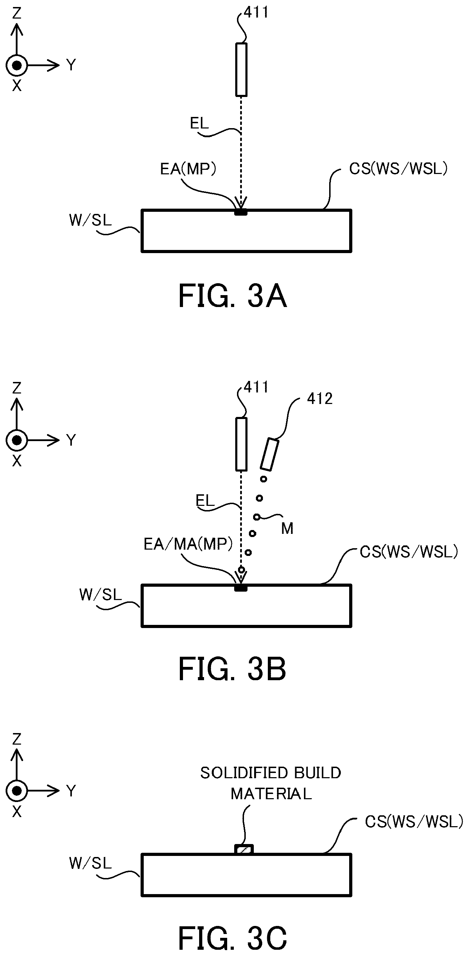

Firstly, an operation for forming each structural layer SL will be described. The build system 1 sets the irradiation area EA on the build surface CS that is set on the workpiece surface WS or an upper surface WSL of the uppermost (namely, at the most +Z side) structural layer SL of the formed structural layer(s) SL, and emits the light EL from the irradiation system 411 so that the light EL is condensed at the irradiation area EA under the control of the control apparatus 7. Namely, in the first build operation, a light concentration position (namely, a condensed position, in other words, at a position at which the light EL is condensed most along the Z axis direction or a propagating direction of the light EL) of the light EL is set on the build surface CS. Note that the light concentration position of the light EL may be set at a position that is away from the build surface CS in the Z axis direction. As a result, as illustrated in FIG. 3A, the melt pool (namely, a pool of a liquid metal or resin molten by the light EL) MP facing to a irradiation system 411 side (namely, the +Z side) is formed at the desired area on the build surface CS by the light EL emitted from the irradiation system 411. Moreover, the build system 1 sets the supply area MA at the desired area on the build surface CS and supplies the build materials M to the supply area MA from the material nozzle 412 under the control of the control apparatus 7. Here, since the irradiation area EA is coincident with the supply area MA as described above, the supply area MA is set at an area at which the melt pool MP is formed. Thus, the build system 1 supplies the build materials M to the melt pool MP from the material nozzle 412, as illustrated in FIG. 3B. As a result, the build materials M supplied to the melt pool MP are molten. When the irradiation area EA is away from the melt pool MP due to the movement of the build head 41, the melt pool MP is not irradiated with the light EL. Thus, the build materials M molten in the melt pool MP are cooled and solidified (namely, coagulated) again. As a result, as illustrated in FIG. 3C, the solidified build materials M are deposited on the build surface CS. Namely, a build object is formed by a deposition of the solidified build materials M. Namely, the build object is formed at the irradiation system 411 side (namely, the +Z side) of the build surface CS by the additive processing for adding the deposition of the build materials M to the build surface CS.

A series of build process including the formation of the melt pool MP by the irradiation of the light EL, the supply of the build materials M to the melt pool MP, the melting of the supplied build materials M and the solidification of the molten build materials M is repeated while moving the build head 41 along the build surface CS. Namely, the series of the build process is repeated while fixing the position of the build head 41 in the Z axis direction and moving the build head 41 along at least one of the X axis and the Y axis. When the build head 41 moves along the build surface CS, the irradiation area EA, the supply area MA and the melt pool MP also move. Therefore, the series of the build process is repeated while moving the irradiation area EA, the supply area MA and the melt pool MP along the build surface CS. In this case, the area on which the build object should be formed is selectively irradiated with the light EL and an area on which the build object should not be formed is not selectively irradiated with the light EL. Note that it can be said that the irradiation area EA is not set at the area on which the build object should not be formed. Namely, the build system 1 moves the irradiation area EA, the supply area MA and the melt pool MP along the build surface CS and irradiates the build surface CS with the light EL at a timing based on a distribution pattern of an area on which the build object should be formed (namely, a pattern of the structural layer SL). As a result, the structural layer SL that is an aggregation of the build object of the solidified build materials M is formed on the build surface CS. Note that the irradiation area EA, the supply area MA and the melt pool MP move along the build surface CS in the above described description, however, the build surface CS may move relative to the irradiation area EA as described in the below described second modified example.

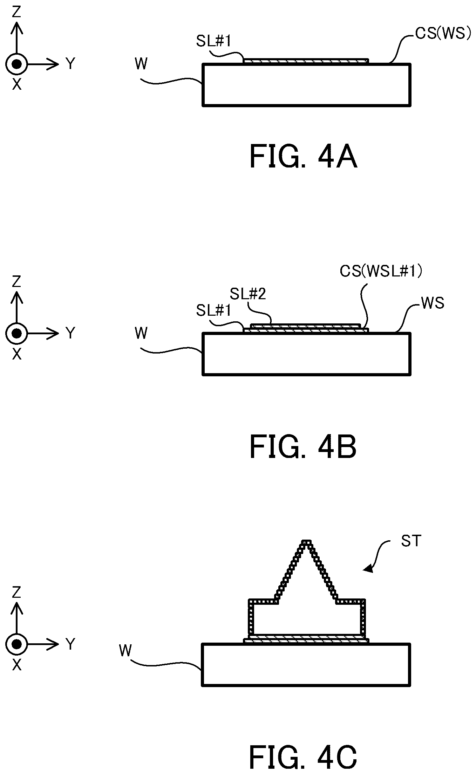

The build system 1 repeats the operation for forming the structural layer SL on the basis of the three-dimensional model data under the control of the control apparatus 7. Specifically, the control apparatus 7 firstly generates a slice data by performing a slicing process on the three-dimensional model data by a layer pitch. Note that the control apparatus 7 may modify at least a part of the slice data on the basis of a characteristic of the build system 1. The build system 1 performs an operation for forming the first structural layer SL#1 on the build surface CS that corresponds to the workpiece surface WS of the workpiece W on the basis of the three-dimensional model data corresponding to a structural layer SL#1(namely, the slice data corresponding to the structural layer SL#1) under the control of the control apparatus 7. As a result, as illustrated in FIG. 4A, the structural layer SL#1 is formed on the workpiece surface WS. Then, the build system 1 sets the upper surface WSL#1 of the structural layer SL#1 to new build surface CS and forms a second structural layer SL#2 on the new build surface CS. In order to form the structural layer SL#2, firstly, the control apparatus 7 controls the head driving system 12_so that the build head 41 moves along the Z axis direction. Specifically, the control apparatus 7 controls the head driving system 12 to move the build head 41 toward the +Z axis side so that the irradiation area EA and the supply area MA are set on the workpiece surface WSL of the structural layer SL#1 (namely, the new build surface CS). By this, the light concentration position of the light EL is set on the new build surface CS. Then, the build system 1 forms the structural layer SL#2 on the basis of the slice data corresponding to the structural layer SL#2 by the operation that is same as the operation for forming the structural layer SL#1 under the control of the control apparatus 7. As a result, as illustrated in FIG. 4B, the structural layer SL#2 is formed on the upper surface WSL#1 of the structural layer SL#1. Then, same operation is repeated until all structural layers SL constituting the three-dimensional structural object ST that should be formed on the workpiece W are formed. As a result, the three-dimensional structural object ST is formed by a layered structural object in which the plurality of structural layers SL are laminated along the Z axis (namely, along a direction from a bottom surface to an upper surface of the melt pool MP), as illustrated in FIG. 4C.

### (2-2) Second Build Operation

Next, the second build operation will be described. The build system 1 performing the second build operation forms the extending structural object SP that extends in the direction that intersects with the build surface CS. Next, a flow of an operation for forming the extending structural object SP will be described.

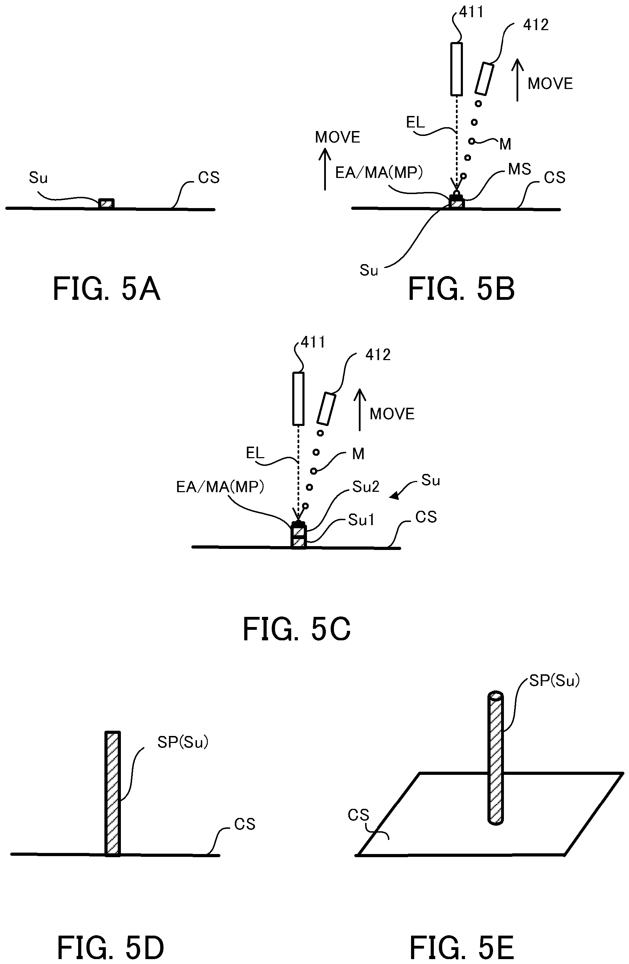

Firstly, the build system 1 sets the irradiation area EA on the build surface CS and emits the light EL from the irradiation system 411 so that the light EL is condensed at the irradiation area EA under the control of the control apparatus 7 even in the second build operation, as with the first build operation. Moreover, the build system 1 sets the supply area MA at the desired area on the build surface CS and supplies the build materials M to the supply area MA from the material nozzle 412 under the control of the control apparatus 7. As a result, as illustrated in FIG. 5A, a build object Su is formed by a deposition of the solidified build materials M at the irradiation system 411 side of the build surface CS. Namely, the build object Su that protrudes from the build surface CS toward the direction that intersects with the build surface CS is formed at the build surface CS. This process in the second build operation is same as that in the first build operation.

Then, in the first build operation, the build system 1 forms the first structural layer SL#1 on the build surface CS by moving the irradiation area EA and the supply area MA (furthermore, moving the melt pool MP as a result) relative to the build surface CS along the build surface CS. On the other hand, in the second build operation, the build system 1 forms the extending structural object SP by moving the irradiation area EA relative to the build surface CS along the direction that intersects with the build surface CS while emitting the light EL from the irradiation system 411. Namely, the build system 1 forms the extending structural object SP by changing a positional relationship between the irradiation area EA and the build surface CS along the direction that intersects with the build surface CS while emitting the light EL from the irradiation system 411.

The build system 1 moves the build head 41 relative to the build surface CS in order to move the irradiation area EA relative to the build surface CS even in the second build operation, as with the first build operation. In this case, the build system 1 may move the build head 41 in a sequential manner so that the irradiation area EA moves relative to the build surface CS in a sequential manner. Alternatively, the build system 1 may move the build head 41 in a stepwise manner so that the irradiation area EA moves relative to the build surface CS in a stepwise manner. Note that the build system 1 may move the irradiation area EA relative to the build surface CS by moving the stage 43 relative to the build head 41, when the stage 43 is movable as described below.

As described above, the supply area MA to which the build materials M are supplied is aligned to be coincident with the irradiation area EA. Thus, it can be said that the build system 1 forms the extending structural object SP by moving the supply area MA along the direction that intersects with the build surface CS while emitting the light EL from the irradiation system 411. Namely, it can be said that the build system 1 forms the extending structural object SP by changing a positional relationship between the supply area MA and the build surface CS along the direction that intersects with the build surface CS while emitting the light EL from the irradiation system 411.

As described above, the melt pool MPO is formed at a position at which the irradiation area EA is set. Thus, it can be said that the build system 1 forms the extending structural object SP by moving the melt pool MP along the direction that intersects with the build surface CS while emitting the light EL from the irradiation system 411. Namely, it can be said that the build system 1 forms the extending structural object SP by changing a positional relationship between the melt pool MP and the build surface CS along the direction that intersects with the build surface CS while emitting the light EL from the irradiation system 411.

As one example, as illustrated in FIG. 5B, the build system 1 may move the irradiation area EA, the supply area MA and the melt pool MP along a direction that is perpendicular to the build surface CS. Namely, the build system 1 may change the positional relationship between the build surface CS and each of the irradiation area EA, the supply area MA and the melt pool MP in the direction that is perpendicular to the build surface CS while maintaining the positional relationship between the build surface CS and each of the irradiation area EA, the supply area MA and the melt pool MP in a direction along the build surface CS. In this case, typically, the build system 1 may move the irradiation area EA, the supply area MA and the melt pool MP along the direction that is perpendicular to the build surface CS by moving the build head 41 along the direction that is perpendicular to the build surface CS. Namely, the build system 1 may move the irradiation area EA, the supply area MA and the melt pool MP along the direction that is perpendicular to the build surface CS by moving the build head 41 so as to change a positional relationship between the build surface CS and the build head 41 in the direction that is perpendicular to the build surface CS while maintaining the positional relationship between the build surface CS and the build head 41 in the direction along the build surface CS.

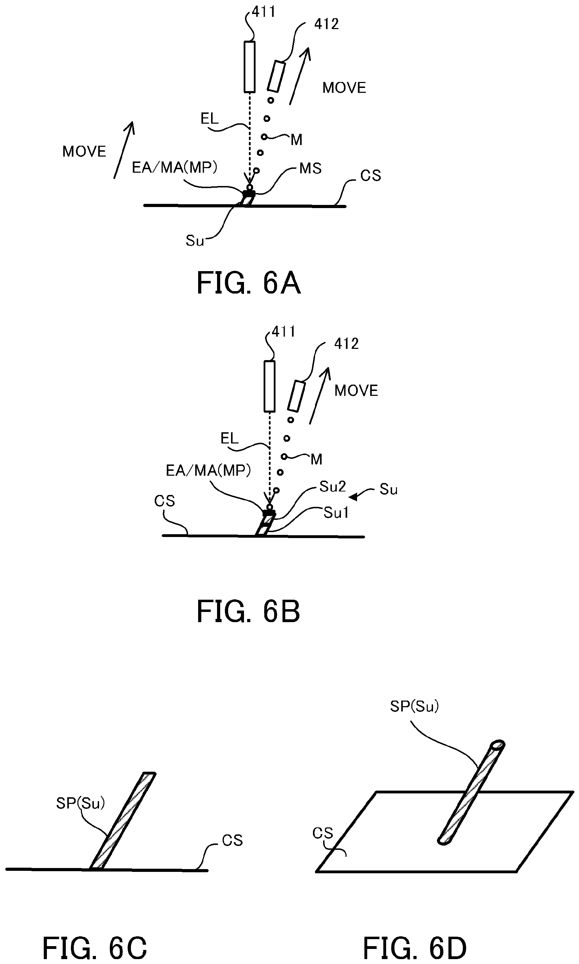

Alternatively, as illustrated in FIG. 6A, the build system 1 may move the irradiation area EA, the supply area MA and the melt pool MP along a direction that is inclined with respect to the build surface CS. Namely, the build system 1 may change the positional relationship between the build surface CS and each of the irradiation area EA, the supply area MA and the melt pool MP in the direction that is perpendicular to the build surface CS while changing the positional relationship between the build surface CS and each of the irradiation area EA, the supply area MA and the melt pool MP in a direction along the build surface CS. In this case, typically, the build system 1 may move the irradiation area EA, the supply area MA and the melt pool MP along the direction that is inclined with respect to the build surface CS by moving the build head 41 along the direction that is inclined with respect to the build surface CS. Namely, the build system 1 may move the irradiation area EA, the supply area MA and the melt pool MP along the direction that is inclined with respect to the build surface CS by moving the build head 41 so as to change the positional relationship between the build surface CS and the build head 41 in the direction that is perpendicular to the build surface CS while changing the positional relationship between the build surface CS and the build head 41 in the direction along the build surface CS. As described above, the build system 1 forms the extending structural object SP that extends in the direction that intersects with the build surface CS by moving the irradiation area EA, the supply area MA and the melt pool MP along the direction that intersects with the build surface CS.

When the irradiation area EA, the supply area MA and the melt pool MP moves along the direction that is inclined with respect to the build surface CS, the build system 1 may move the irradiation area EA, the supply area MA and the melt pool MP so that an moving distance (for example, a moving distance per unit time or a total amount of the moving distance) of the irradiation area EA, the supply area MA and the melt pool MP in the direction that is perpendicular to the build surface CS is longer than the moving distance of the irradiation area EA, the supply area MA and the melt pool MP in the direction along the build surface CS. The build system 1 may move the irradiation area EA, the supply area MA and the melt pool MP so that the moving distance of the irradiation area EA, the supply area MA and the melt pool MP in the direction that is perpendicular to the build surface CS is shorter than the moving distance of the irradiation area EA, the supply area MA and the melt pool MP in the direction along the build surface CS. The build system 1 may move the irradiation area EA, the supply area MA and the melt pool MP so that the moving distance of the irradiation area EA, the supply area MA and the melt pool MP in the direction that is perpendicular to the build surface CS is same as the moving distance of the irradiation area EA, the supply area MA and the melt pool MP in the direction along the build surface CS.

Especially in the second build operation, the build system 1 forms the extending structural object SP by moving the irradiation area EA, the supply area MA and the melt pool MP, which are set on the build surface CS, to a position that is away from the build surface CS while emitting the light EL from the irradiation system 411. The build system 1 forms the extending structural object SP by moving the irradiation area EA, the supply area MA and the melt pool MP, which are set on the build surface CS, in a space that is away from the build surface CS while emitting the light EL from the irradiation system 411.

Specifically, as illustrated in each of FIG. 5B and FIG. 6A, the build system 1 forms the build object Su at the build surface CS and then set the irradiation area EA and the supply area MA at a surface MS of the build object SP, wherein the surface MS faces to a direction in which the extending structural object SP is desired to be extended. Namely, the build system 1 moves (alternatively, bring closer) the irradiation area EA and the supply area MA, which are set on the build surface CS, to the surface MS of the build object SP that is already formed on the build surface CS, wherein the surface MS faces to the direction in which the extending structural object SP is desired to be extended. Note that the direction in which the extending structural object SP is desired to be extended intersects with the build surface CS. In this case, typically, the build system 1 may set the irradiation area EA and the supply area MA at at least a part of the surface MS of the build object Su by moving the irradiation area EA and the supply area MA (namely, moving the build head 41) toward the direction in which the extending structural object SP is desired to be extended. When the irradiation area EA and the supply area MA are set at the surface MS of the build object Su, the surface MS of the build object Su is irradiated with the light EL. Especially, the surface MS of the build object Su is irradiated with the light EL through a space that spreads from the surface MS to the direction in which the extending structural object SP is desired to be extended. As a result, the melt pool MP that faces to the direction in which the extending structural object SP is desired to be extended is formed at the surface MS of the build object Su. Thus, it can be said that the build system 1 moves (alternatively, bring closer) the melt pool MP, which is formed on the build surface CS, to the surface MS of the build object Su that is already formed on the build surface CS.

As a result, the build materials M are supplied to the melt pool MP formed at the surface MS of the build object Su. Thus, build materials M that are supplied to the melt pool MP formed at the surface MS of the build object Su are molten. When the irradiation area EA moves (namely, is away) from the surface MS of the build object Su due to the movement of the build head 41, the build materials M molten in the melt pool MP formed at the surface MS of the build object Su are cooled and solidified (namely, coagulated) again. As a result, as illustrated in each of FIG. 5C and FIG. 6B, a new build object Su2 is formed by a deposition of the solidified build materials M on the build object Su that is already formed on the build surface CS (in the following description, the build object Su that is already formed on the build surface CS is referred to as a "build object Su1"). Namely, new build object Su2 that protrudes from the build object Su1 toward the direction in which the extending structural object SP is desired to be extended is formed at the surface MS of the build object Su1 that is already formed on the build surface CS. As a result, the build object Su including the build object Su1 and the build object Su2 is formed on the build surface CS. The build system 1 grows the build object Su toward the direction that intersects with the build surface CS by forming the build object Su2 on the build object Su1 like this. The build system 1 grows the build object Su toward the direction in which the extending structural object SP is desired to be extended. The build system 1 grows the build object Su toward the direction that is away from the build surface CS. The build system 1 grows the build object Su in a space that is away from the build surface CS. The build system 1 grows the build object Su so that an edge part of the build object Su (especially, the edge part that faces to the direction in which the extending structural object SP is desired to be extended) is away from the build surface CS toward the direction in which the extending structural object SP is desired to be extended.

Then, the build system 1 repeats an operation of moving the irradiation area EA, the supply area MA and the melt pool MP toward the direction in which the extending structural object SP is desired to be extended while emitting the light EL from the irradiation system 411. Namely, the build system 1 repeats an operation of moving the build head 41 so that the irradiation area EA and the supply area MA area set at the surface MS, which faces toward the direction in which the extending structural object SP is desired to be extended, of the build object Su that is already formed on the build surface CS while emitting the light EL from the irradiation system 411. As a result, the build system 1 repeats an operation of growing the build object Su toward the direction in which the extending structural object SP is desired to be extended while emitting the light EL from the irradiation system 411. Thus, the extending structural object SP that is the build object Su extending along a moving direction of the irradiation area EA and the supply area MA is formed on the build surface CS. Namely, the extending structural object SP that is the build object Su extending along the direction that intersects with the build surface CS in the space away from the build surface CS is formed on the build surface CS. For example, when the irradiation area EA and the supply area MA moves along the direction that is perpendicular to the build surface CS as illustrated in FIG. 5B and FIG. 5C, the extending structural object SP that is the build object Su extending along the direction that is perpendicular to the build surface CS is formed as illustrated in FIG. 5D and FIG. 5E. For example, when the irradiation area EA and the supply area MA moves along the direction that is inclined with respect to the build surface CS as illustrated in FIG. 6A and FIG. 6B, the extending structural object SP that is the build object Su extending along the direction that is inclined with respect to the build surface CS is formed as illustrated in FIG. 6C and FIG. 6D. Note that the extending structural object SP may be typically a liner-shaped, a bar-shaped, a prism-shaped, a columnar-shaped or a longitudinal-shaped structural object, as illustrated in FIG. 5D, FIG. 5E, FIG. 6C and FIG, 6D. However, the shape of the extending structural object SP is not limited to these shapes.

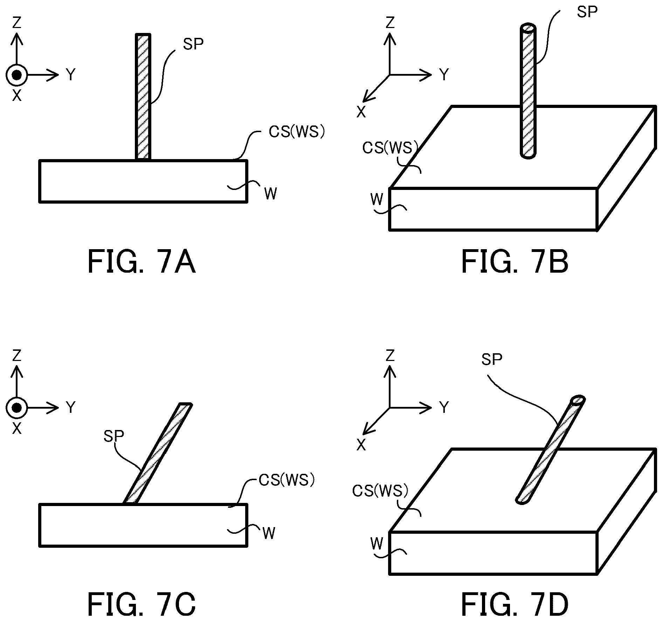

As described above, the build surface CS may be the surface along the XY plane. For example, the build surface CS may be set at the workpiece surface WS that is the surface along the XY plane. When the build surface CS is the surface along the XY plane, the direction that is perpendicular to the build surface CS is the Z axis direction (namely, a vertical direction). In this case, the build system 1 may form the extending structural object SP that extends from the build surface CS toward the vertical direction, as illustrated in FIG. 7A and FIG. 7B. Moreover, the direction that is inclined with respect to the build surface CS is a direction that is inclined with respect to the Z axis direction. Namely, the direction that is inclined with respect to the build surface CS is a direction including a direction component along the vertical direction. In this case, the build system 1 may form the extending structural object SP that extends from the build surface CS toward the direction including the direction component along the vertical direction, as illustrated in FIG. 7C and FIG. 7D.

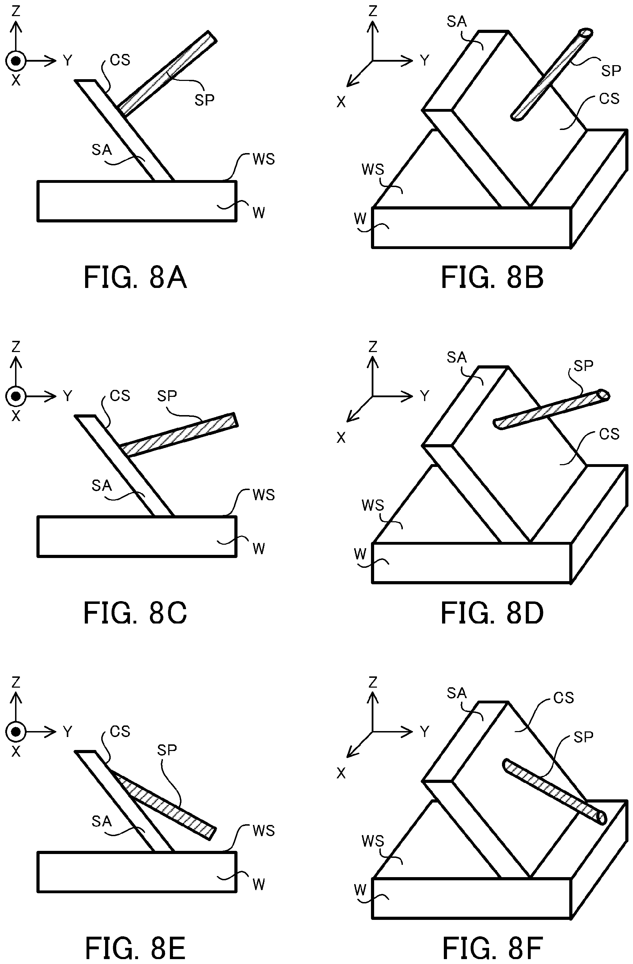

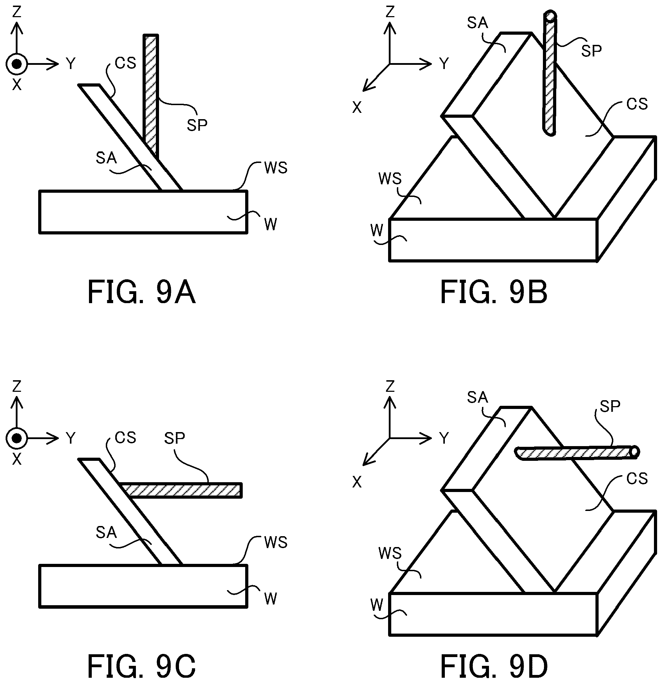

As described above, the build surface CS may be the surface that is inclined with respect to the XY plane. For example, the build surface CS may be set at a surface, which is inclined with respect to the XY plane, of an existing structural object SA that is formed at the workpiece surface WS. When the build surface CS is the surface that is inclined with respect to the XY plane, the direction that is perpendicular to the build surface CS is a direction that is inclined with respect to the Z axis direction (namely, the vertical direction). Furthermore, the direction that is inclined with respect to the build surface CS may be also a direction that is inclined with respect to the Z axis direction. In this case, the build system 1 may form the extending structural object SP that extends from the build surface CS toward the direction including the direction component along the vertical direction, as illustrated in FIG. 8A to FIG. 8F. Note that the build system 1 may form the extending structural object SP that extends from the build surface CS toward a direction including a direction component that is against gravity (namely, a direction component toward the +Z side), as illustrated in FIG. 8A to FIG. 8D. Alternatively, the build system 1 may form the extending structural object SP that extends from the build surface CS toward a direction including a direction component along gravity (namely, a direction component toward the -Z side), as illustrated in FIG. 8E to FIG. 8F. Alternatively, the direction that is inclined with respect to the build surface CS may be the direction along the Z axis direction. In this case, the build system 1 may form the extending structural object SP that extends from the build surface CS toward the vertical direction, as illustrated in FIG. 9A and FIG. 9B. Alternatively, the direction that is inclined with respect to the build surface CS may be the direction that is perpendicular to the Z axis direction (namely, the direction along the XY plane, and the horizontal direction). In this case, the build system 1 may form the extending structural object SP that extends from the build surface CS toward the horizontal direction, as illustrated in FIG. 9C and FIG. 9D. Note that the build system 1 may form the extending structural object SP that extends toward a direction along the workpiece surface WS (namely, that is parallel to the workpiece surface WS), because the workpiece surface WS is a surface along the horizontal direction.

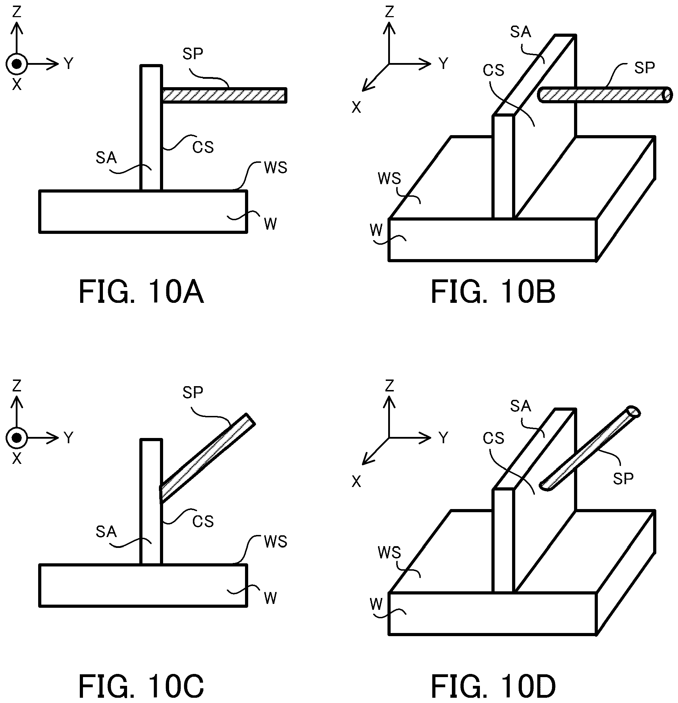

As described above, the build surface CS may be the surface that is perpendicular to the XY plane (namely, the surface including the Z axis). For example, the build surface CS may be set at a surface, which is perpendicular to the XY plane, of the existing structural object SA that is formed at the workpiece surface WS. When the build surface CS is the surface that is perpendicular to the XY plane, the direction that is perpendicular to the build surface CS is the direction that is perpendicular to the Z axis direction (namely, the direction along the XY plane, and the horizontal direction). In this case, the build system 1 may form the extending structural object SP that extends from the build surface CS toward the horizontal direction, as illustrated in FIG. 10A and FIG. 10B. Moreover, the direction that is inclined with respect to the build surface CS is the direction that is inclined with respect to the Z axis direction. In this case, the build system 1 may form the extending structural object SP that extends from the build surface CS toward the direction including the direction component along the vertical direction, as illustrated in FIG. 10C and FIG. 10D. Moreover, although it is not illustrated in the drawings, even when the build surface CS is the surface that is perpendicular to the XY plane, the build system 1 may form the extending structural object SP that extends from the build surface CS toward the direction including the direction component that is against gravity, and may form the extending structural object SP that extends from the build surface CS toward the direction including the direction component along gravity.

Note that the build system 1 may form the extending structural object SP that is away from the workpiece surface WS when the build surface CS is set at the surface of the existing structural object SA that is formed at the workpiece surface WS. The build system 1 may form the extending structural object SP so that a gap is secured between the extending structural object SP and the workpiece surface WS. Each of FIG. 8A to FIG. 10D illustrates the extending structural object SP that is away from the workpiece surface WS. However, the build system 1 may form the extending structural object SP at least a part of which contacts with or is integrated with the workpiece surface WS. For example, the build system 1 may form the extending structural object SP that extends from the build surface CS toward the workpiece surface WS. In this case, an edge part of the extending structural object SP contacts with or is integrated with the workpiece surface WS.

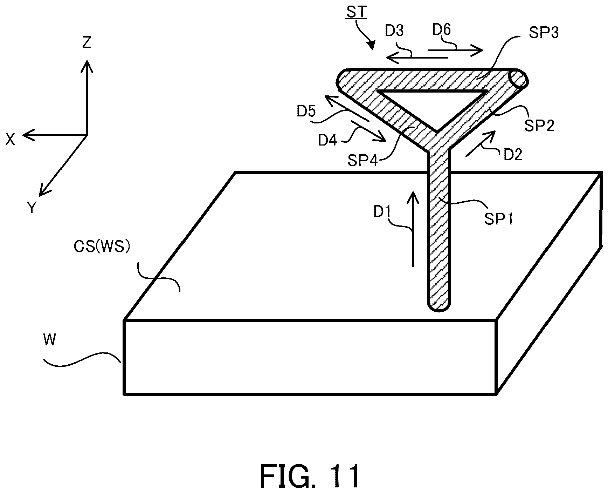

The build system 1 repeatedly performs an operation of forming this extending structural object SP on the basis of the three-dimensional model data under the control of the control apparatus 7. Specifically, the control apparatus 7 firstly converts the three-dimensional model data to a wireframe data that represents the three-dimensional structural object ST as a group of lines (what we call a solid line art model). Then, the control apparatus 7 determines an order in which the extending structural objects SP that corresponds to the lines, respectively, are formed. Then, the build system 1 repeats the operation of forming the extending structural objects SP that corresponds to the lines, respectively, in the order that is determined by the control apparatus 7. For example, in an example illustrated in FIG. 11, the build system 1 forms the three-dimensional structural object ST including extending structural objects SP1 to SP4 by performing (i) an operation of forming the extending structural object SP1 that extends toward a first direction D1 that is perpendicular to the build surface CS, (ii) an operation of forming the extending structural object SP2 that extends toward a second direction D2 that is inclined with respect to the build surface CS, (iii) an operation of forming the extending structural object SP3 that extends toward a third direction D3 that is parallel to the build surface CS and (iv) an operation of forming the extending structural object SP4 that extends toward a fourth direction D4 that is inclined with respect to the build surface CS

In this case, the build system 1 may form one extending structural object SP that extends toward one direction by moving the irradiation area EA toward the one direction while emitting the light EL and then form, next to the one extending structural object SP, another extending structural object SP that extends toward another direction by moving the irradiation area EA toward another direction that is different from the one direction (namely, that intersects with) the one direction while emitting the light EL. Namely, the build system 1 may form the three-dimensional structural object ST in which a plurality of extending structural objects SP that extend toward a plurality of different directions, respectively, are integrated. For example, in the example illustrated in FIG. 11, the build system 1 firstly forms the extending structural object SP1 that extends from the build surface CS (namely, the workpiece surface WS) toward the first direction D1 by moving the irradiation area EA from the build surface CS (namely, the workpiece surface WS) toward the first direction D1. Then, the build system 1 forms, next to the extending structural object SP1, the extending structural object SP2 that extends from an edge part of the extending structural object SP1 toward the second direction D2 by moving the irradiation area EA from the edge part of the extending structural object SP1 toward the second direction D2. Then, the build system 1 forms, next to the extending structural object SP2, the extending structural object SP3 that extends from an edge part of the extending structural object SP2 toward the third direction D3 by moving the irradiation area EA from the edge part of the extending structural object SP2 toward the third direction D3. Then, the build system 1 forms, next to the extending structural object SP3, the extending structural object SP4 that extends from an edge part of the extending structural object SP3 toward the fourth direction D4 by moving the irradiation area EA from the edge part of the extending structural object SP3 toward the fourth direction D4. As a result, the three-dimensional structural object ST in which the extending structural objects SP1 to SP4 are integrated is formed on the build surface CS.

However, there is a possibility that it is difficult for the build system 1 to form the extending structural object SP4 by moving the irradiation area EA from the edge part of the extending structural object SP3 toward the fourth direction D4. This is because the light EL emitted for forming the extending structural object SP4 is shielded by the existing structural object SP3 that may be located between the extending structural object SP4 and the irradiation system 411. Thus, after the control apparatus 7 determines the order in which the plurality of extending structural objects SP are formed on the basis of the wireframe data, the control apparatus 7 may determined whether or not there is a possibility that the light EL emitted for forming one extending structural object SP is shielded by some kind of object that shields the light EL (for example, at least one of an obstacle and the extending structural object SP that is already formed) if the plurality of extending structural objects SP are formed in the determined order. For example, when it is estimated that some kind of object is located on an optical path of the light EL between one extending structural object SP and the irradiation system 411 at a timing when the one extending structural object SP is formed, the control apparatus 7 may determine that there is a possibility that the light EL emitted for forming the one extending structural object SP is shielded by some kind of object. For example, when it is estimated that some kind of object is located within a predetermined distance from the optical path of the light EL between one extending structural object SP and the irradiation system 411 at the timing when the one extending structural object SP is formed, the control apparatus 7 may determine that there is a possibility that the light EL emitted for forming the one extending structural object SP is shielded by some kind of object. When it is determined that there is a possibility that the light EL emitted for forming the one extending structural object SP is shielded by some kind of object, the control apparatus 7 may determine the order in which the plurality of extending structural objects SP are formed again so that there is no possibility that the light EL emitted for forming each extending structural object SP is shielded by some kind of object. For example, in the example illustrated in FIG. 11, the control apparatus 7 may determine the order in which the plurality of extending structural objects SP are formed again so that the extending structural object SP1, the extending structural object SP2, the extending structural object SP4 and the extending structural object SP3 are formed in this order. In this case, the build system 1 may form, next to the extending structural object SP1, the extending structural object SP4 that extends from the edge part of the extending structural object SP1 toward a fifth direction D5 by moving the irradiation area EA from the edge part of the extending structural object SP1 toward the fifth direction D5 that is opposite to the fourth direction D4, after forming the extending structural objects SP1 and SP2. Then, the build system 1 may form, next to the extending structural object SP2 or SP4, the extending structural object SP3 that extends from the edge part of the extending structural object SP2 toward the third direction D3 or from an edge part of the extending structural object SP4 toward a sixth direction D6 by moving the irradiation area EA from the edge part of the extending structural object SP2 toward the third direction D3 or from the edge part of the extending structural object SP4 toward the sixth direction D6 that is opposite to the third direction D3.

Note that the control apparatus 7 may determine that there is a possibility that the build materials M supplied for forming one extending structural object SP is shielded by some kind of object, when it is estimated that some kind of object is located within a predetermined distance from the material supply between the one extending structural object SP and the material nozzle 412 at the timing when the one extending structural object SP is formed. When it is determined that there is a possibility that the build materials M supplied for forming one extending structural object SP is shielded by some kind of object, the control apparatus 7 may determine the order in which the plurality of extending structural objects SP are formed again so that there is no possibility that the build materials M supplied for forming each extending structural object SP is shielded by some kind of object.

Note that the extending structural object SP (for example, the extending structural objects SP1 to SP4 illustrated in FIG. 11) has a linearly extending shape in the above described description, however, the shape of the extending structural object SP is not limited to the linearly extending shape, may be a shape extending along a curved line or a shape extending along a polygonal line in a zig-zag manner.

The control apparatus 7 may determine the order in which the plurality of extending structural objects SP are formed on the basis of the wireframe data so that moving path of the irradiation area EA, the supply area MA and the melt pool MP in the space that is away from the build surface CS is relatively short or the shortest. Especially, when the three-dimensional structural object ST in which the plurality of extending structural objects SP that extend toward the plurality of different directions, respectively, are integrated is formed, the control apparatus 7 may determine the order in which the plurality of extending structural objects SP are formed on the basis of the wireframe data so that the plurality of extending structural objects SP constituting the three-dimensional structural object ST are formed as sequentially as possible. In other words, the control apparatus 7 may determine the order in which the plurality of extending structural objects SP are formed on the basis of the wireframe data so that a period when the build head 41 is moved without emitting the light EL in the process of forming the plurality of extending structural objects SP in order is as short as possible. As one example, for example, the control apparatus 7 may determine the order in which the plurality of extending structural objects SP are formed on the basis of the wireframe data so that the plurality of extending structural objects SP constituting the three-dimensional structural object ST are formed in a traversable manner.

According to the above described second build operation, the three-dimensional structural object having a shape including the plurality of extending structural objects PS is formed more appropriately, compared to the first build operation.

### (3) Modified Example

Next, modified examples of the build system 1 will be described.

### (3-1) First Modified Example

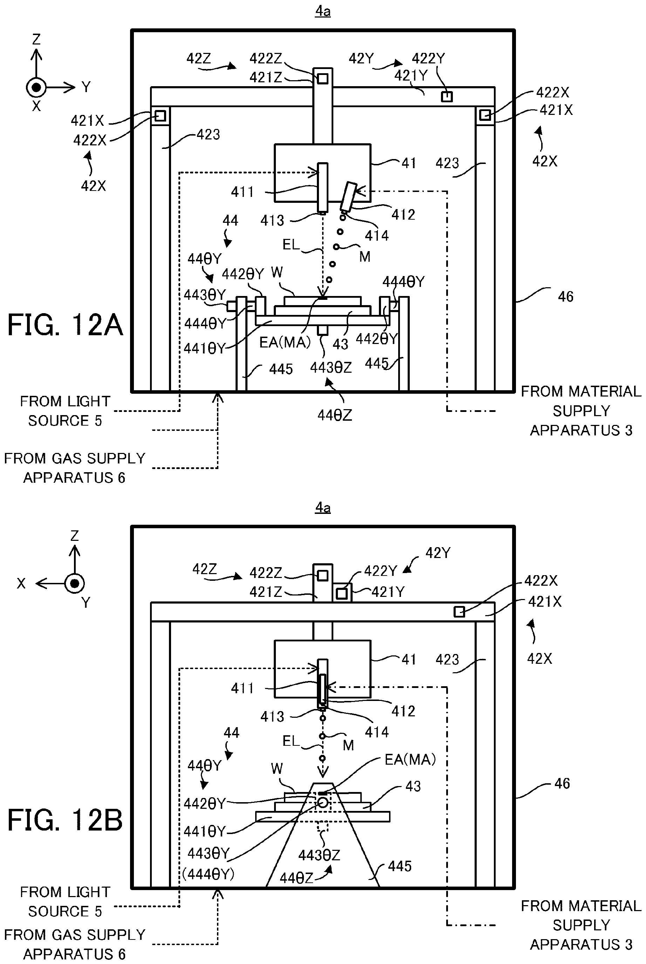

Firstly, a first modified example will be described. A build system 1a in the first modified example is different from the above described build system 1 in that it is provided with a build apparatus 4a instead of the build apparatus 4. The build apparatus 4a is different from the above described build apparatus 4 in that it is provided with a stage driving system 44. Another structure of the build system 1a is same as another structure of the above described build system 1. Next, with reference to FIG. 12, the build apparatus 4a in the first modified example.

As illustrated in FIG. 12, the build apparatus 4a is provided with the stage driving system 44 in addition to the build head 41, the head driving system 42 and the stage 43. The stage driving system 44 moves the stage 43 (changes an attitude of the stage 43). In order to move the stage 43, the stage driving system 44 is provided with a stage driving system 44θY and a stage driving system 44θZ. The stage driving system 44θY moves the stage 43 along the θY axis. In other words, the stage driving system 44θY rotates the stage 43 around the Y axis. The stage driving system 44θZ moves the stage 43 along the θZ axis. In other words, the stage driving system 44θZ rotates the stage 43 around the Z axis. Namely, the stage driving system 44 moves the stage 43 along each of the θY axis and the θZ axis. Note that the θY axis is set to penetrate the workpiece W (to be coincident with an upper surface of the stage 43) in an example illustrated in FIG. 12A and FIG. 12B, however, the θY axis is not limited to this and may be set to be above or below the workpiece W (above (at the + Z side from) the upper surface of the stage 43 or below (at the - Z side from) the upper surface of the stage 43).

Each of the stage driving system 44θY and the stage driving system 44θZ is a driving system including a rotational motor, for example, however, may be a driving system including another motor (alternatively, a driving source). The stage driving system 44θY is provided with: a plate-like holding member 441θY that holds the stage 43; a plate-like wall member 442θY that penetrates from an end part at the + Y side and an end part at the - Y side of the holding member 441θY toward the + Z side; a rotational motor 443θY having a rotor that is configured to rotate around the Y axis; and a connecting member 444θY that connects the rotor of the rotational motor 443θY and the wall member 442θY. The rotational motor 443θY is fixed to a support frame 445 disposed at the bottom surface of the chamber 46 through a vibration isolator such as an air spring. The stage driving system 44θZ is provided with a rotational motor 443θZ that is configured to rotate around the Z axis and that has a rotor connected to the stage 43. The rotational motor 443θZ is fixed to the holding member 441θY. When the rotational motor 443θY is driven, the holding member 441θY (furthermore, the stage 43 held by the holding member 441θY) rotates around the Y axis. When the rotational motor 44θZ is driven, the holding member 441θY (furthermore, the stage 43 held by the holding member 441θY) rotates around the Y axis. When the rotational motor 443θZ is driven, the stage 43 rotates around the Z axis. Note that the support frame 445 is disposed in the chamber 46 through the vibration isolator that reduces a vibration from the floor on which the build system 1a is disposed or a vibration from an outside of the chamber 46 in the build system 1, however, it may be disposed between the build system 1a and the floor when the vibration from the outside of the chamber 46 in the build system 1a is ignorable, for example, and the vibration isolator may not be used when a vibration condition from the floor is good (low vibration).

When the stage 43 moves along each of the θY axis and the θZ axis (rotates around each of the θY axis and the θZ axis), a relative position of the stage 43 (furthermore, at least one of the workpiece W held by the stage 43 and the three-dimensional structural object ST) relative to the irradiation system 411 changes. More specifically, when the stage 43 moves along each of the θY axis and the θZ axis, the attitude of the stage 43 (furthermore, at least one of the workpiece W held by the stage 43 and the three-dimensional structural object ST) relative to the irradiation system 411 changes. The attitude of the stage 43 (furthermore, at least one of the workpiece W held by the stage 43 and the three-dimensional structural object ST) relative to an emitting direction of the light EL from the irradiation system 411 changes. The attitude of the stage 43 (furthermore, at least one of the workpiece W held by the stage 43 and the three-dimensional structural object ST) relative to an axis line of the light EL propagating from the irradiation system 411 to the irradiation area EA changes.

The build system 1a having this stage driving system 44 is allowed to move the irradiation area EA, the supply area MA and the melt pool MP relative to the build surface CS by moving the stage 43 by using the stage driving system 44. Specifically, the build system 1a is allowed to move the irradiation area EA, the supply area MA and the melt pool MP relative to the build surface CS by moving the stage 43 relative to the irradiation area EA, the supply area MA and the melt pool MP. The build system 1a is allowed to move the irradiation area EA, the supply area MA and the melt pool MP relative to the build surface CS by moving the stage 43 relative to the build head 41. Thus, the build system 1a in the first modified example achieves an effect that is same as the effect achievable by the above described build system 1.

Note that the stage driving system 44 moves the stage 43 along each of the θY axis and the θZ axis. However, the stage driving system 44 may not move the stage 43 along at least one of the θY axis and the θZ axis. The stage driving system 44 may move the stage 43 along at least one of the θX axis, the X axis, the Y axis and the Z axis in addition to or instead of at least one of the θY axis and the θZ axis.

### (3-2) Second Modified Example

Next, a second modified example will be described. A build system 1b in the second modified example has a same structure as the above described build system 1a in the first modified example. Namely, the build system 1b is provided with the stage driving system 44.

Furthermore, the build system 1b changes the attitude of the stage 43 (namely, the attitude of the build surface CS) relative to the light EL by using the stage driving system 44 so that the build object Su grows toward a desired direction to form the three-dimensional structural object ST, when the three-dimensional structural object ST is formed by the second build operation. Specifically, the build system 1b changes the attitude of the stage 43 relative to the light EL by using the stage driving system 44 so that the build object Su grows toward the desired direction, which is along the vertical direction and is against the gravity, to form the three-dimensional structural object ST. In the below described description, the desired direction that is along the vertical direction and is against the gravity is referred to as a "+Z direction", for the purpose of simple description. However, the desire direction may be a direction that is different from the direction that is along the vertical direction and is against the gravity.

As described above, the build system 1b may form the three-dimensional structural object ST including the plurality of extending structural objects SP that extend toward the plurality of different directions, respectively. Even in this case, the build system 1b changes the attitude of the stage 43 relative to the light EL so that the each of the plurality of build objects Su that constitute the plurality of extending structural objects SP, respectively, grows toward the same +Z direction to form the plurality of extending structural objects SP. For example, the build system 1b forms one extending structural object SP by growing one build object Su toward the +Z direction, then, changes the attitude of the stage 43 so that another build object Su is allowed to grow toward the +Z direction, and then, forms another extending structural object SP by growing another build object Su toward the +Z direction.

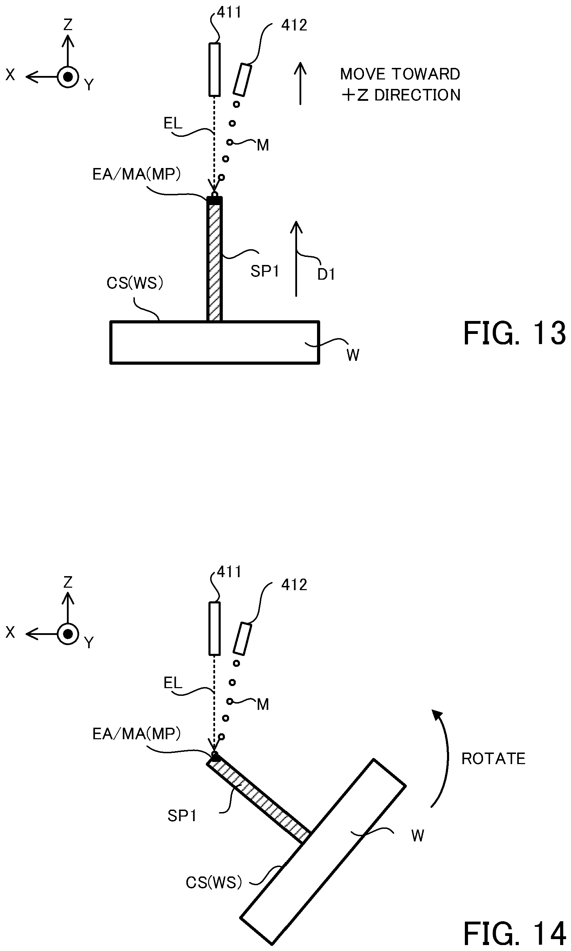

As one example, with reference to FIG. 13 to FIG. 20, an example in which the three-dimensional structural object ST illustrated in FIG. 11 is formed by the second build operation in the modified example will be described. Firstly, as illustrated in FIG. 13, the build system 1b firstly forms the extending structural object SP1 that corresponds to a part of the three-dimensional structural object ST on the build surface CS (the workpiece surface WS in this case). In order to form the extending structural object SP1, the build system 1b firstly controls the attitude of the stage 43 so that the build object Su constituting the extending structural object SP1 is allowed to grow toward the +Z direction. Specifically, since the extending structural object SP1 is a structural object that extends toward the first direction D1 that is perpendicular to the build surface CS, the build system 1b changes the attitude of the stage 43 so that the build surface CS becomes the surface along the XY plane. In this case, the build system 1b may change a position of the build head 41, if needed. Then, the build system 1b grows the build object Su toward the +Z direction to form the extending structural object SP1. Specifically, build system 1b moves the build head 41 relative to the stage 43 toward the +Z direction while emitting the light EL. In this case, the build system 1b may maintain the attitude of the stage 43. As a result, the irradiation area EA, the supply area MA and the melt pool MP move relative to the build surface CS toward the +Z direction. Thus, the build object Su grows from the build surface CS toward the +Z direction. Namely, the extending structural object SP1 is formed by the build object Su that grows from the build surface CS toward the +Z direction. In other words, the extending structural object SP1 that extends from the build surface CS toward the +Z direction is formed.

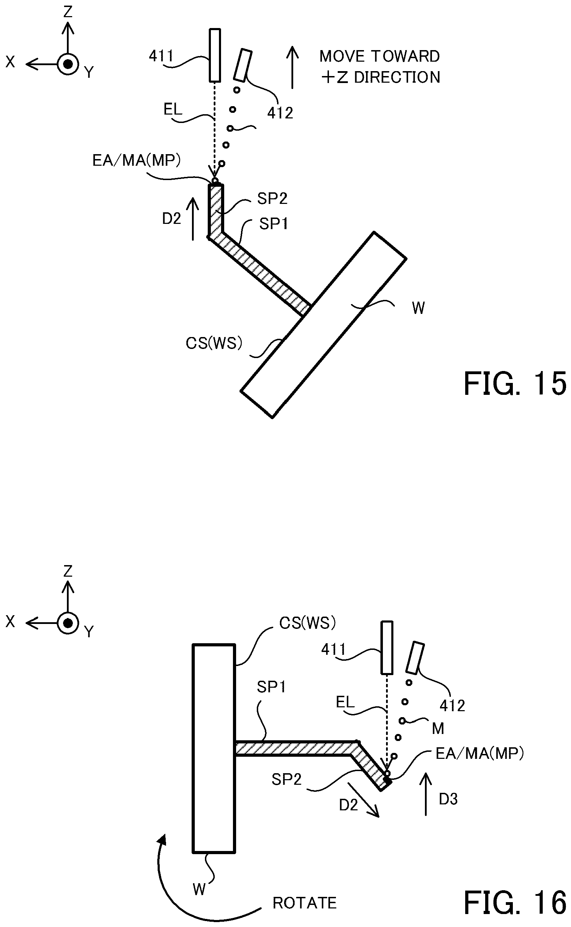

Next, the build system 1b controls the attitude of the stage 43 so that the build object Su constituting the extending structural object SP2 is allowed to grow toward the +Z direction that is same as the direction toward which the build object Su constituting the extending structural object SP1 grows. Specifically, since the extending structural object SP2 is a structural object that extends along the second direction D2 that is inclined with respect to the build surface CS, the build system 1b changes the attitude of the stage 43 so that the build surface CS becomes the surface that is inclined with respect to the XY plane as illustrated in FIG. 14. In an example illustrated in FIG. 14, the build system 1b changes the attitude of the stage 43 so that the stage 43 rotates around the Y axis. In this case, the build system 1b may change the position of the build head 41, if needed. Here, the supply of the build materials M by the material nozzle 412 of the build head 41 and the irradiation of the light EL by the irradiation system 411 may be stopped when the attitude of the stage 43 is changed. Note that the attitude of the stage 43 may be changed while performing the supply of the build materials M by the material nozzle 412 and the irradiation of the light EL by the irradiation system 411. Then, as illustrated in FIG. 15, the build system 1b grows the build object Su toward the +Z direction to form the extending structural object SP2. In other words, the build system 1b grows the build object Su toward the second direction D2 that is inclined with respect to the build surface CS to form the extending structural object SP2. Specifically, build system 1b moves the build head 41 relative to the stage 43 toward the +Z direction (the second direction D2 in this case) while emitting the light EL. In this case, the build system 1b may maintain the attitude of the stage 43. As a result, the irradiation area EA, the supply area MA and the melt pool MP move toward the +Z direction (the second direction D2 in this case) relative to the extending structural object SP1 that is already formed. Thus, the build object Su grows from the edge part of the extending structural object SP1 toward the +Z direction (the second direction D2 in this case). Namely, the extending structural object SP2 is formed by the build object Su that grows from the edge part of the extending structural object SP1 toward the +Z direction (the second direction D2 in this case). In other words, the extending structural object SP2 that extends from the edge part of the extending structural object SP1 toward the +Z direction (the second direction D2 in this case) is formed. Note that the extending structural object SP2 that extends from the edge part of the extending structural object SP1 toward the +Z direction is a structural object that extends toward the second direction D2 that is inclined with respect to the build surface CS, because the build surface CS is the surface that is inclined with respect to the XY plane.

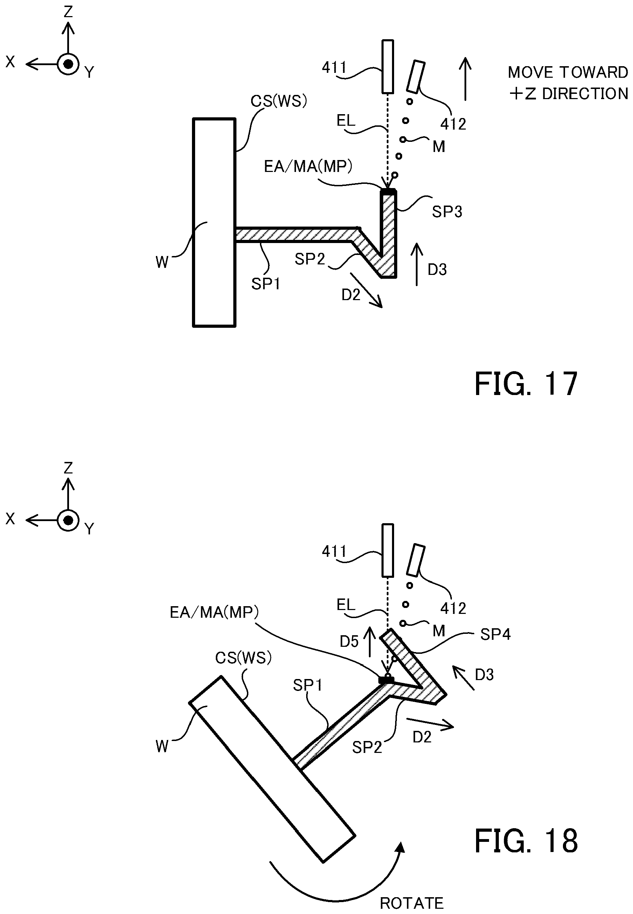

Next, the build system 1b controls the attitude of the stage 43 so that the build object Su constituting the extending structural object SP3 is allowed to grow toward the +Z direction that is same as the direction toward which the build object Su constituting the extending structural objects SP1 and SP2 grows. Specifically, since the extending structural object SP3 is a structural object that extends along the third direction D3 that is parallel to the build surface CS, the build system 1b changes the attitude of the stage 43 so that the build surface CS becomes the surface that is perpendicular to the XY plane as illustrated in FIG. 16. In an example illustrated in FIG. 16, the build system 1b changes the attitude of the stage 43 so that the stage 43 rotates around the Y axis. In this case, the build system 1b may change the position of the build head 41, if needed. Here, the supply of the build materials M by the material nozzle 412 and the irradiation of the light EL by the irradiation system 411 may be stopped when the attitude of the stage 43 is changed, or the attitude of the stage 43 may be changed while performing the supply of the build materials M by the material nozzle 412 and the irradiation of the light EL by the irradiation system 411. Then, as illustrated in FIG. 17, the build system 1b grows the build object Su toward the +Z direction (the third direction D3 in this case) to form the extending structural object SP3. Specifically, build system 1b moves the build head 41 relative to the stage 43 toward the +Z direction (the third direction D3 in this case) while emitting the light EL. In this case, the build system 1b may maintain the attitude of the stage 43. As a result, the irradiation area EA, the supply area MA and the melt pool MP move toward the +Z direction (the third direction D3 in this case) relative to the extending structural object SP2 that is already formed. Thus, the build object Su grows from the edge part of the extending structural object SP2 toward the +Z direction (the third direction D3 in this case). Namely, the extending structural object SP3 is formed by the build object Su that grows from the edge part of the extending structural object SP2 toward the +Z direction (the third direction D3 in this case). In other words, the extending structural object SP3 that extends from the edge part of the extending structural object SP2 toward the +Z direction (the third direction D3 in this case) is formed. Note that the extending structural object SP3 that extends from the edge part of the extending structural object SP2 toward the +Z direction is a structural object that extends toward the third direction D3 that is parallel to the build surface CS, because the build surface CS is the surface that is perpendicular to the XY plane.

Next, the build system 1b controls the attitude of the stage 43 so that the build object Su constituting the extending structural object SP4 is allowed to grow toward the +Z direction that is same as the direction toward which the build object Su constituting the extending structural objects SP1 to SP3 grows. Specifically, since the extending structural object SP4 is a structural object that extends along the fifth direction D5 that is inclined with respect to the build surface CS, the build system 1b changes the attitude of the stage 43 so that the build surface CS becomes the surface that is inclined with respect to the XY plane as illustrated in FIG. 18. In an example illustrated in FIG. 18, the build system 1b changes the attitude of the stage 43 so that the stage 43 rotates around the Y axis. In this case, the build system 1b may change the position of the build head 41, if needed. Here, the supply of the build materials M by the material nozzle 412 and the irradiation of the light EL by the irradiation system 411 may be stopped when the attitude of the stage 43 is changed and the position of the build head 41 is changed. Note that the attitude of the stage 43 may be changed and the position of the build head 41 may be changed while performing the supply of the build materials M by the material nozzle 412 and the irradiation of the light EL by the irradiation system 411. Then, the build system 1b grows the build object Su toward the +Z direction (the fifth direction D5 in this case) to form the extending structural object SP4. Specifically, build system 1b moves the build head 41 relative to the stage 43 toward the +Z direction while emitting the light EL. In this case, the build system 1b may maintain the attitude of the stage 43. As a result, the irradiation area EA, the supply area MA and the melt pool MP move toward the +Z direction (the fifth direction D5 in this case) relative to the extending structural object SP1 that is already formed. Thus, the build object Su grows from the edge part of the extending structural object SP1 toward the +Z direction (the fifth direction D5 in this case). Namely, the extending structural object SP4 is formed by the build object Su that grows from the edge part of the extending structural object SP1 toward the +Z direction (the fifth direction D5 in this case). In other words, the extending structural object SP4 that extends from the edge part of the extending structural object SP1 toward the +Z direction (the fifth direction D5 in this case) is formed. Note that the extending structural object SP4 that extends from the edge part of the extending structural object SP1 toward the +Z direction is a structural object that extends toward the fifth direction D5 that is inclined with respect to the build surface CS, because the build surface CS is the surface that is inclined with respect to the XY plane.

In the example illustrated in FIG. 18, there is a possibility that the light EL emitted for forming the extending structural object SP4 is shielded by the extending structural object SP3 that may be located between the extending structural object SP4 and the irradiation system 411, if the attitude of the stage 43 is changed so that the build object Su constituting the extending structural object SP4 is allowed to grow toward the +Z direction. In this case, the build system 1b may form the plurality of extending structural objects SP in an appropriate order so that there is no possibility that the light EL emitted for forming each extending structural object SP is shielded by some kind of object, as described above. For example, the build system 1b may form the extending structural object SP2, then form the extending structural object SP4, and then forms the extending structural object SP3.

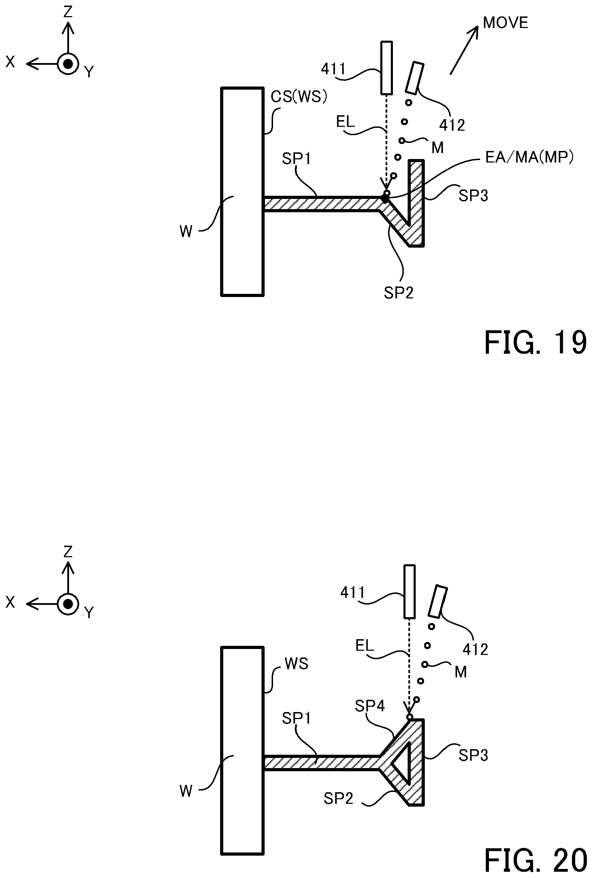

Alternatively, when there is a possibility that the light EL emitted for forming one extending structural object SP is shielded by some kind of object at the timing when the one extending structural object SP is formed, the build system 1b may allow the build object Su constituting the one extending structural object SP to grow toward a direction that is different from the +Z direction, as an exceptional case. Namely, the build system 1b may prioritize reducing the possibility that the light EL emitted for forming one extending structural object SP is shielded by some kind of object over growing the build object Su constituting the one extending structural object SP toward the +Z direction. In this case, for example, as illustrated in FIG. 19, the build system 1b may change the attitude of the stage 43 so that there is no possibility that the light EL emitted for forming one extending structural object SP is shielded by some kind of object. Namely, the build system 1b may change the positional relationship between the light EL and the stage 43 (furthermore, the workpiece W on the stage 43, the extending structural object SP on the workpiece W and the like) so that there is no possibility that the light EL emitted for forming one extending structural object SP is shielded by some kind of object. In this case, the build system 1b may change the position of the build head 41, if needed. Then, as illustrated in FIG. 20, the build system 1b may grow the build object Su toward the direction that is different from the +Z direction (the direction that is inclined with respect to the Z axis direction in an example illustrated in FIG. 20) to form the extending structural object SP4. Note that the build system 1b may change the attitude of the stage 43 so that there is no possibility that the light EL emitted for forming one extending structural object SP is shielded by some kind of object not only in the case where the extending structural object SP is formed so that the build object Su grows toward the +Z direction as described in the second modified example but also in the case where there is a possibility that the light EL emitted for forming one extending structural object SP is shielded by some kind of object.

The build system 1b in the second modified example achieves an effect that is same as the effect achievable by the above described build system 1. Moreover, the build system 1b in the second modified example forms the extending structural object SP by growing the build object Su toward the +Z direction. When the build object Su grows toward the +Z direction, the irradiation area EA is set at a surface of the build object Su that faces to the +Z direction. Namely, the surface MS of the build object Su that faces to the direction in which the extending structural object SP is desired to be extended is irradiated with the light EL that is emitted toward the -Z direction from the build head 41 that is away from the workpiece W toward the +Z direction. Moreover, when the build object Su grows toward the +Z direction, the melt pool MP is formed at the surface that faces to the +Z direction. Namely, the build materials M that is supplied toward the -Z direction from the build head 41 that is away from the workpiece W toward the +Z direction are appropriately supplied to the melt pool MP. Moreover, since the melt pool MP is formed at the surface that faces to the +Z direction, there is a low possibility that the build materials M molten in the melt pool MP spill from the melt pool MP due to the gravity. Thus, the build system 1b forms the three-dimensional structural object ST relatively appropriately.

### (3-3) Other Modified Example

In the above described description, the build system 1 moves the irradiation area EA relative to the build surface CS by moving the build head 41. However, the build system 1 may move the irradiation area EA relative to the build surface CS by deflecting the light EL in addition to or instead of moving the build head 41. In this case, the irradiation system 411 may be provided with an optical system (for example, a Galvano mirror or the like) that is configured to deflect the light EL, for example.

In the above described description, the build system 1 melts the build materials M by irradiating the build materials M with the light EL. However, the build system 1 may melt the build materials M by irradiating the build materials M with any energy beam. In this case, the build system 1 may be provided with a beam irradiation apparatus that is configured to emit any energy beam in addition to or instead of the irradiation system 411. Any energy beam includes a charged particle beam such as an electron beam and an ion beam or an electromagnetic wave, although it is not limited. Moreover, the build system 1 may melt the build materials M by transferring the heat to the build materials M. In this case, the build apparatus 4 may melt the build materials M by supplying a high temperature gas (as one example, blaze) to the build materials M in addition to or instead of the irradiation system 411.

In the above described description, the build system 1 is configured to form the build object by the Laser Metal Deposition. However, the build system 1 may form the build object from the build materials M by another method that is configured to form the build object. A Powder Bed Fusion such as a Selective Laser Sintering (SLS), a Binder Jetting or a Laser Metal Fusion (LMF) is one example of another method, for example.

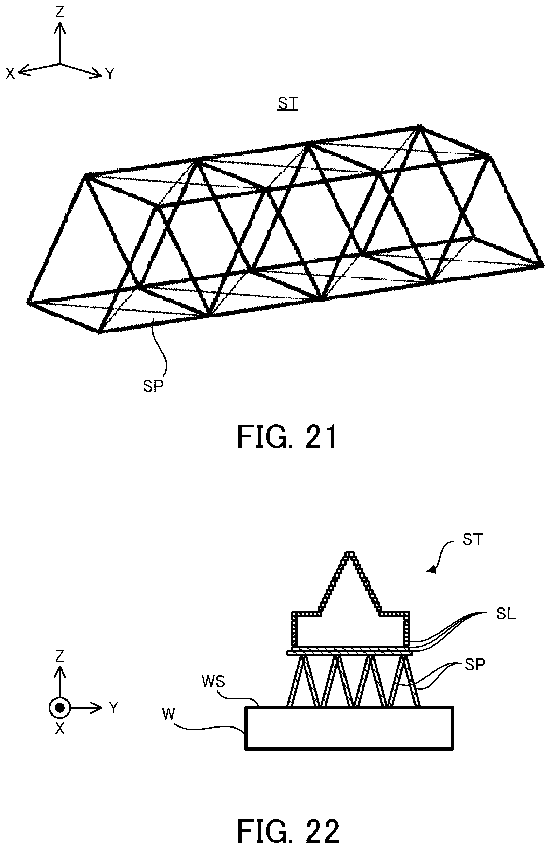

Note that the build system 1 may build, as one example of the three-dimensional structural object ST, a truss structural object that is a framework structure having a plurality of triangles, as illustrated in FIG. 21. Moreover, the build system 1 may build the extending structural object SP that extends in a direction intersecting with the workpiece surface WS of the workpiece W so that the extending structural object SP is a support member, as illustrated in FIG. 22. In this case, the structural layer SL may be built on the extending structural object SP. Note that the build system 1 may build a lowermost structural layer SL (namely, the structural layer SL that is closest to the extending structural object SP) of the structural layers SL build on the extending structural object SP by changing an attitude of the stage 43 so that an extending direction of the lowermost structural layer SL faces to the ± Z axis direction. Note that the extending structural object SP may be built at the upper side of the structural layer SL.

In the above described description, the build system 1 forms the three-dimensional structural object ST by supplying the build materials M from the material nozzle 412 to the irradiation area EA which the irradiation system 411 irradiates with the light EL. However, the build system 1 may form the three-dimensional structural object ST by supplying the build materials M from the material nozzle 412 without emitting the light EL from the irradiation system 411. For example, the build system 1 may form the three-dimensional structural object ST by blowing the build materials M from the material nozzle 412 to the build surface CS to melt the build materials M at the build surface CS and solidifying the molten build materials M. For example, the build system 1 may form the three-dimensional structural object ST by blowing the build materials M at the ultra-high speed from the material nozzle 412 to the build surface CS to melt the build materials M at the build surface CS and solidifying the molten build materials M. For example, the build system 1 may form the three-dimensional structural object ST by blowing the heated build materials M from the material nozzle 412 to the build surface CS to melt the build materials M at the build surface CS and solidifying the molten build materials M. When the three-dimensional structural object ST is formed without emitting the light EL from the irradiation system 411 as described above, the build system 1 (especially, the build head 41) may not be provided with the irradiation system 411.

At least a part of the features of each embodiment described above may be appropriately combined with at least another part of the features of each embodiment described above. A part of the features of each embodiment described above may not be used. Moreover, the disclosures of all publications and United States patents that are cited in each embodiment described above are incorporated in the disclosures of the present application by reference if it is legally permitted.

The present invention is not limited to the above described examples and is allowed to be changed, if desired, without departing from the essence or spirit of the invention which can be read from the claims and the entire specification. A processing apparatus and a processing method, which involve such changes, are also intended to be within the technical scope of the present invention.

### Description of Reference Codes

- 1: build system
- 3: material supply apparatus
- 4: build apparatus
- 41: build head
- 411: irradiation system
- 412: material nozzle
- 42: head driving system
- 43: stage
- 7: control apparatus
- W: workpiece
- WS: workpiece surface
- CS: build surface
- EL: light
- M: build material
- EA: irradiation area
- MA: supply area
- MP: melt pool
- Su: build object
- SP: extending structural object
- ST: three-dimensional structural object

## Claims

1. A processing apparatus comprising:
an irradiation apparatus that emits an energy beam; and
a supply apparatus that supplies powdery materials to an irradiation position of the energy beam,
wherein
the processing apparatus forms a first melt pool that faces to a first direction by irradiating a first object with the energy beam and forms a first build object at the first direction side of the first object by supplying the powdery materials to the first melt pool, and forms a second melt pool that faces to the first direction by irradiating the first build object with the energy beam and forms a second build object at the first direction side of the first build object by supplying the powdery materials to the second melt pool.

2. The processing apparatus according to claim 1, wherein
the irradiation position of the energy beam by the irradiation apparatus moves along an axis that intersects with a surface crossing the first direction.

3. The processing apparatus according to claim 2, wherein
a position to which the powdery materials are supplied by the supply apparatus moves along the axis.

4. The processing apparatus according to any one of claims 1 to 3, wherein
the first and second build objects are formed without stopping the irradiation of the energy beam.

5. The processing apparatus according to any one of claims 1 to 4, wherein
the first and second build objects are formed without stopping the supply of the powdery materials.

6. A processing apparatus comprising:
an irradiation apparatus that emits an energy beam; and
a supply apparatus that supplies materials to an irradiation position of the energy beam,
wherein
the processing apparatus forms a build object by moving the irradiation position from a first position on a first object to a second position that is away from the first object.

7. The processing apparatus according to claim 6, wherein
the processing apparatus forms the build object that is extended from the first position.

8. The processing apparatus according to claim 6 or 7, wherein
the processing apparatus irradiates the first position on the first object with the energy beam and then moves the irradiation position in a space that is away from the first object to form the build object in the space.

9. The processing apparatus according to any one of claims 6 to 8, wherein
the processing apparatus forms a first melt pool by irradiating the first object with the energy beam and forms a first build object by supplying the materials to the first melt pool, and forms a second melt pool by irradiating the first build object with the energy beam and forms a second build object by supplying the materials to the second melt pool.

10. The processing apparatus according to claim 9, wherein
the first build object protrudes from the first object,
the second build object protrudes from the first build object.

11. The processing apparatus according to claim 9 or 10, wherein
the first melt pool faces a first direction side,
the first build object is formed at the first direction side of the first object,
the second build object is formed at the first direction side of the first build object.

12. The processing apparatus according to any one of claims 6 to 11, wherein
a supply position of the materials by the supply apparatus moves from the first position to the second position.

13. A processing apparatus comprising:
an irradiation apparatus that emits an energy beam; and
a supply apparatus that supplies materials to an irradiation position of the energy beam,
wherein
the processing apparatus forms a first melt pool by irradiating a first object with the energy beam and forms a first build object that protrudes from the first object by supplying the materials to the first melt pool, and forms a second melt pool by irradiating the first build object with the energy beam and forms a second build object that protrudes from the first build object by supplying the materials to the second melt pool.

14. A processing apparatus comprising:
an irradiation apparatus that emits an energy beam; and
a supply apparatus that supplies materials to an irradiation position of the energy beam,
wherein
the processing apparatus forms a first melt pool that faces to a first direction side by irradiating a first object with the energy beam and forms a first build object at the first direction side of the first object by supplying the materials to the first melt pool, and forms a second melt pool that faces to the first direction side by irradiating the first build object with the energy beam and forms a second build object at the first direction side of the first build object by supplying the materials to the second melt pool.

15. A processing apparatus comprising:
a supply apparatus that supplies materials; and
an irradiation apparatus that irradiates a supply position of the materials with an energy beam,
wherein
the processing apparatus forms a build object by moving the supply position from a first position on a first object to a second position that is away from the first object.

16. A processing apparatus comprising:
an irradiation apparatus that emits an energy beam; and
a supply apparatus that supplies materials to an irradiation position of the energy beam,
wherein
when the processing apparatus forms a build object at a first surface of a first object by irradiating the first object with the energy beam, the processing apparatus grows the build object toward a first direction that intersects with the first surface while emitting the energy beam.

17. The processing apparatus according to claim 16, wherein
the first direction includes a direction component along a vertical direction.

18. A processing apparatus comprising:
an irradiation apparatus that emits an energy beam; and
a supply apparatus that supplies materials to an irradiation position of the energy beam,
wherein
when the processing apparatus forms a build object at a first surface of a first object by irradiating the first object with the energy beam, the processing apparatus grows the build object toward a first direction including a direction component along a vertical direction while emitting the energy beam.

19. The processing apparatus according to any one of claims 16 to 18, wherein
the first direction includes a direction component that is against gravity.

20. A processing apparatus comprising:
an irradiation apparatus that emits an energy beam; and
a supply apparatus that supplies materials to an irradiation position of the energy beam,
wherein
when the processing apparatus forms a build object at a first surface of a first object by irradiating the first object with the energy beam, the processing apparatus grows the build object toward a first direction including a direction component that is against gravity while emitting the energy beam.

21. The processing apparatus according to any one of claims 16 to 20, wherein
the first object is formed at a second surface of a second object,
the first surface includes a surface that intersects with the second surface.

22. The processing apparatus according to claim 21, wherein
the processing apparatus forms the build object while securing a gap between the build object and the second object.

23. The processing apparatus according to claim 21 or 22, wherein
the processing apparatus forms the build object that is away from the second object.

24. The processing apparatus according to any one of claims 21 to 23, wherein
the first direction includes a direction component along the second surface.

25. The processing apparatus according to any one of claims 16 to 24, wherein
the processing apparatus forms the build object that extends toward the first direction by growing the build object toward the first direction.

26. The processing apparatus according to any one of claims 16 to 25, wherein
the processing apparatus forms the build object that extends to protrude from the first object toward the first direction by growing the build object toward the first direction.

27. The processing apparatus according to any one of claims 16 to 26, wherein
the processing apparatus grows the build object toward the first direction by changing a positional relationship between the first surface and the irradiation position in the first direction while emitting the energy beam.

28. A processing apparatus comprising:
an irradiation apparatus that emits an energy beam; and
a supply apparatus that supplies materials to an irradiation position of the energy beam,
wherein
when the processing apparatus forms a build object at a first surface of a first object by irradiating the first object with the energy beam, the processing apparatus changes a positional relationship between the first surface and the irradiation position in a first direction that intersects with the first surface while emitting the energy beam.

29. The processing apparatus according to claim 27 or 28, wherein
the processing apparatus changes the positional relationship between the first surface and the irradiation position in the first direction so that the irradiation position moves toward the first direction relative to the first surface.

30. The processing apparatus according to any one of claims 27 to 29, wherein
the processing apparatus changes the positional relationship between the first surface and the irradiation position in the first direction so that the irradiation position goes away from the first surface along the first direction.

31. The processing apparatus according to any one of claims 27 to 30, wherein
the processing apparatus changes the positional relationship between the first surface and the irradiation position in the first direction so that the irradiation position comes close to a third surface of the build object that is already formed, the third surface faces to the first direction.

32. The processing apparatus according to any one of claims 27 to 31, wherein
the processing apparatus changes the positional relationship between the first surface and the irradiation position in the first direction while changing the positional relationship between the first surface and the irradiation position in a second direction that is along the first surface.

33. The processing apparatus according to any one of claims 27 to 31, wherein
the processing apparatus changes the positional relationship between the first surface and the irradiation position in the first direction while maintaining the positional relationship between the first surface and the irradiation position in a second direction that is along the first surface.

34. The processing apparatus according to any one of claims 16 to 33, wherein
the processing apparatus forms the build object by forming a melt pool by the irradiation of the energy beam,
the processing apparatus grows the build object toward the first direction by changing a positional relationship between the first surface and the melt pool in the first direction while emitting the energy beam.

35. A processing apparatus comprising:
an irradiation apparatus that emits an energy beam to form a melt pool at an irradiation position of the energy beam; and
a supply apparatus that supplies materials to the irradiation position,
wherein
when the processing apparatus forms a build object at a first surface of a first object by irradiating the first object with the energy beam, the processing apparatus changes a positional relationship between the first surface and the melt pool in a first direction that intersects with the first surface while emitting the energy beam.

36. The processing apparatus according to claim 34 or 35, wherein
the processing apparatus changes the positional relationship between the first surface and the melt pool in the first direction so that the melt pool moves toward the first direction relative to the first surface.

37. The processing apparatus according to any one of claims 34 to 36, wherein
the processing apparatus changes the positional relationship between the first surface and the melt pool in the first direction so that the melt pool goes away from the first surface along the first direction.

38. The processing apparatus according to any one of claims 34 to 37, wherein
the processing apparatus changes the positional relationship between the first surface and the melt pool in the first direction so that the melt pool is formed at a third surface of the build object that is already formed, the third surface faces to the first direction.

39. The processing apparatus according to any one of claims 34 to 38, wherein
the processing apparatus changes the positional relationship between the first surface and the melt pool in the first direction while changing the positional relationship between the first surface and the melt pool in a second direction that is along the first surface.

40. The processing apparatus according to any one of claims 34 to 38, wherein
the processing apparatus changes the positional relationship between the first surface and the melt pool in the first direction while maintaining the positional relationship between the first surface and the melt pool in a second direction that is along the first surface.

41. The processing apparatus according to any one of claims 16 to 40, wherein
the processing apparatus grows the build object toward the first direction by changing a positional relationship between the first surface and a supply position of the materials from the supply apparatus in the first direction while emitting the energy beam.

42. A processing apparatus comprising:
an irradiation apparatus that emits an energy beam; and
a supply apparatus that supplies materials in accordance with the irradiation of the energy beam,
wherein
when the processing apparatus forms a build object at a first surface of a first object by irradiating the first object with the energy beam, the processing apparatus changes a positional relationship between the first surface and a supply position of the materials from the supply apparatus in a first direction that intersects with the first surface while emitting the energy beam.

43. The processing apparatus according to claim 41 or 42, wherein
the processing apparatus changes the positional relationship between the first surface and the supply position in the first direction so that the supply position moves toward the first direction relative to the first surface.

44. The processing apparatus according to any one of claims 41 to 43, wherein
the processing apparatus changes the positional relationship between the first surface and the supply position in the first direction so that the supply position goes away from the first surface along the first direction.

45. The processing apparatus according to any one of claims 41 to 44, wherein
the processing apparatus changes the positional relationship between the first surface and the irradiation position in the first direction so that the supply position is set at a third surface of the build object that is already formed, the third surface faces to the first direction.

46. The processing apparatus according to any one of claims 41 to 45, wherein
the processing apparatus changes the positional relationship between the first surface and the supply position in the first direction while changing the positional relationship between the first surface and the supply position in a second direction that is along the first surface.

47. The processing apparatus according to any one of claims 41 to 45, wherein
the processing apparatus changes the positional relationship between the first surface and the supply position in the first direction while maintaining the positional relationship between the first surface and the supply position in a second direction that is along the first surface.

48. The processing apparatus according to any one of claims 16 to 47, wherein
the processing apparatus repeats a process for irradiating a third surface of the build object that is already formed with the energy beam to grow the build object toward the first direction from the third surface while emitting the energy beam, the third surface faces to the first direction.

49. The processing apparatus according to any one of claims 16 to 48, wherein
the processing apparatus forms the build object by forming a melt pool by the irradiation of the energy beam,
the processing apparatus repeats a process for forming the melt pool at a third surface of the build object that is already formed to grow the build object toward the first direction from the third surface while emitting the energy beam, the third surface faces to the first direction.

50. The processing apparatus according to any one of claims 16 to 49, wherein
the processing apparatus repeats a process for supplying the build materials to a third surface of the build object that is already formed to grow the build object toward the first direction from the third surface while emitting the energy beam, the third surface faces to the first direction.

51. The processing apparatus according to any one of claims 16 to 50, wherein
the processing apparatus forms the build object by supplying the build materials to a third surface of the build object that is already formed through a space that spreads at the first direction side from the third surface while emitting the energy beam, the third surface faces to the first direction.

52. The processing apparatus according to any one of claims 16 to 51, wherein
the processing apparatus forms a first part of the build object and then forms a second part of the build object next to the first part while emitting the energy beam, the second part intersects with the first part.

53. The processing apparatus according to claim 52, wherein
at least one of the first and second parts intersects with the first surface.

54. The processing apparatus according to claim 52 or 53, wherein
the processing apparatus changes a positional relationship between the energy beam and the first part while emitting the energy beam so that the first part is grown toward the first direction and then the second part is grown toward the second direction by changing the positional relationship between the energy beam and the first part.

55. The processing apparatus according to any one of claims 16 to 54, wherein
when there is a possibility that the energy beam emitted from the irradiation apparatus is shielded by a shield object, the processing apparatus changes a positional relationship between the energy beam and the shield object.

56. The processing apparatus according to claim 55, wherein
the processing apparatus changes the positional relationship between the energy beam and the shield object so that when the energy beam is not shielded by the shield object.

57. The processing apparatus according to claim 55 or 56, wherein
the shield object includes at least a part of the build object that is formed by the irradiation of the energy beam.

58. The processing apparatus according to any one of claims 55 to 57, wherein
(i) when there is a possibility that the energy beam is shielded by the shield object if the build object is grown toward the first direction, the processing apparatus changes the positional relationship between the energy beam and the shield object so that the build object is grown toward a third direction that is different from the first direction, and (ii) when there is no possibility that the energy beam is shielded by the shield object even if the build object is grown toward the first direction, the processing apparatus grows the build object toward the first direction.

59. The processing apparatus according to any one of claims 55 to 58, wherein
the processing apparatus determines that the there is a possibility that the energy beam is shielded by the shield object, when the shield object exists within a predetermined distance from the energy beam.

60. The processing apparatus according to any one of claims 16 to 59, wherein
the processing apparatus forms the build object by moving an irradiation position of the energy beam from a first position on the first object to a second position that is away from the first object.

61. The processing apparatus according to any one of claims 16 to 60, wherein
the processing apparatus forms a first melt pool by irradiating the first object with the energy beam and forms a first build object that protrudes from the first object by supplying the materials to the first melt pool, and forms a second melt pool by irradiating the first build object with the energy beam and forms a second build object that protrudes from the first build object by supplying the materials to the second melt pool.

62. The processing apparatus according to any one of claims 16 to 61, wherein
the processing apparatus forms a first melt pool that faces to the first direction side by irradiating the first object with the energy beam and forms a first build object at the first direction side of the first object by supplying the materials to the first melt pool, and forms a second melt pool that faces to the first direction side by irradiating the first build object with the energy beam and forms a second build object at the first direction side of the first build object by supplying the materials to the second melt pool.

63. The processing apparatus according to any one of claims 16 to 62, wherein
the processing apparatus forms the build object by moving a supply position of the materials from a first position on the first object to a second position that is away from the first object.

64. The processing apparatus according to any one of claims 16 to 63, wherein
the build object is a liner build object that is extended in the first direction.

65. The processing apparatus according to any one of claims 16 to 64, wherein
the build object protrudes from the first object.

66. The processing apparatus according to any one of claims 16 to 65, wherein
the build object is grown so that an edge part of the build object is away from the first surface.

67. The processing apparatus according to claim 66, wherein
the build object is grown so that the edge part of the build object is away from the first surface toward the first direction.

68. A processing method including:
irradiating an irradiation position with an energy beam; and
supplying materials to the irradiation position,
wherein
the processing method forms a build object by moving the irradiation position from a first position on a first object to a second position that is away from the first object.

69. The processing method according to claim 68, wherein
the processing method forms the build object that is extended from the first position.

70. The processing method according to claim 68 or 69, wherein
the processing method irradiates the first position on the first object with the energy beam and then moves the irradiation position in a space that is away from the first object to form the build object in the space.

71. The processing method according to any one of claims 68 to 70, wherein
the processing method forms a first melt pool by irradiating the first object with the energy beam and forms a first build object by supplying the materials to the first melt pool, and forms a second melt pool by irradiating the first build object with the energy beam and forms a second build object by supplying the materials to the second melt pool.

72. The processing method according to any one of claims 68 to 71, wherein
the first build object protrudes from the first object,
the second build object protrudes from the first build object.

73. The processing method according to any one of claims 68 to 72, wherein
the first melt pool faces a first direction side,
the first build object is formed at the first direction side of the first object,
the second build object is formed at the first direction side of the first build object.

74. The processing method according to any one of claims 68 to 73, wherein
a supply position of the materials moves from the first position to the second position.

75. A processing method including:
emitting an energy beam; and
supplying materials to an irradiation position of the energy beam,
wherein
the processing method forms a first melt pool by irradiating a first object with the energy beam and forms a first build object that protrudes from the first object by supplying the materials to the first melt pool, and forms a second melt pool by irradiating the first build object with the energy beam and forms a second build object that protrudes from the first build object by supplying the materials to the second melt pool.

76. A processing method including:
emitting an energy beam; and
supplying materials to an irradiation position of the energy beam,
wherein
the processing method forms a first melt pool that faces to a first direction side by irradiating a first object with the energy beam and forms a first build object at the first direction side of the first object by supplying the materials to the first melt pool, and forms a second melt pool that faces to the first direction side by irradiating the first build object with the energy beam and forms a second build object at the first direction side of the first build object by supplying the materials to the second melt pool.

77. A processing method including:
supplying materials to a supply position; and
irradiating the supply position with an energy beam,
wherein
the processing method forms a build object by moving the supply position from a first position on a first object to a second position that is away from the first object.

78. A processing method including:
emitting an energy beam; and
supplying materials to an irradiation position of the energy beam,
wherein
when a build object is formed at a first surface of a first object by irradiating the first object with the energy beam, the processing method grows the build object toward a first direction that intersects with the first surface while emitting the energy beam.

79. A processing method including:
emitting an energy beam; and
supplying materials to an irradiation position of the energy beam,
wherein
when a build object is formed at a first surface of a first object by irradiating the first object with the energy beam, the processing method grows the build object toward a first direction including a direction component along a vertical direction while emitting the energy beam.

80. A processing method including:
emitting an energy beam; and
supplying materials to an irradiation position of the energy beam,
wherein
when a build object is formed at a first surface of a first object by irradiating the first object with the energy beam, the processing method grows the build object toward a first direction including a direction component that is against gravity while emitting the energy beam.

81. A processing method including:
emitting an energy beam;
supplying materials to an irradiation position of the energy beam; and
changing a positional relationship between a first surface of a first object and the irradiation position in a first direction that intersects with the first surface while emitting the energy beam, when a build object is formed at the first surface by irradiating the first object with the energy beam.

82. A processing method including:
emitting an energy beam to form a melt pool at an irradiation position of the energy beam;
supplying materials to the irradiation position of the energy beam; and
changing a positional relationship between a first surface of a first object and the melt pool in a first direction that intersects with the first surface while emitting the energy beam, when a build object is formed at the first surface by irradiating the first object with the energy beam.

83. A processing method including:
emitting an energy beam;
supplying materials in accordance with the irradiation of the energy beam; and
changing a positional relationship between a first surface of a first object and a supply position of the materials in a first direction that intersects with the first surface while emitting the energy beam, when a build object is formed at the first surface by irradiating the first object with the energy beam.

84. The processing method according to any one of claims 78 to 83, wherein
the build object is a liner build object that is extended in the first direction.

85. The processing method according to any one of claims 78 to 84, wherein
the build object protrudes from the first object.

86. The processing method according to any one of claims 78 to 85, wherein
the build object is grown so that an edge part of the build object is away from the first surface.

87. The processing method according to claim 86, wherein
the build object is grown so that the edge part of the build object is away from the first surface toward the first direction.

88. A processing apparatus comprising:
an irradiation apparatus that emits an energy beam;
a supply apparatus that supplies materials to an irradiation position of the energy beam; and
a receiving apparatus that receives a control signal for controlling at least one of the irradiation apparatus and the supply apparatus to form a build object by moving the irradiation position from a first position on a first object to a second position that is away from the first object.

89. A processing apparatus comprising:
an irradiation apparatus that emits an energy beam;
a supply apparatus that supplies materials to an irradiation position of the energy beam; and
a receiving apparatus that receives a control signal for controlling at least one of the irradiation apparatus and the supply apparatus to form a first melt pool by irradiating a first object with the energy beam and to form a first build object that protrudes from the first object by supplying the materials to the first melt pool, and to form a second melt pool by irradiating the first build object with the energy beam and to form a second build object that protrudes from the first build object by supplying the materials to the second melt pool.

90. A processing apparatus comprising:
an irradiation apparatus that emits an energy beam;
a supply apparatus that supplies materials to an irradiation position of the energy beam; and
a receiving apparatus that receives a control signal for controlling at least one of the irradiation apparatus and the supply apparatus to form a first melt pool that faces to a first direction side by irradiating a first object with the energy beam and to form a first build object at the first direction side of the first object by supplying the materials to the first melt pool, and to form a second melt pool that faces to the first direction side by irradiating the first build object with the energy beam and form a second build object at the first direction side of the first build object by supplying the materials to the second melt pool.

91. A processing apparatus comprising:
a supply apparatus that supplies materials;
an irradiation apparatus that irradiates a supply position of the materials with an energy beam; and
a receiving apparatus that receives a control signal for controlling at least one of the irradiation apparatus and the supply apparatus to form a build object by moving the supply position from a first position on a first object to a second position that is away from the first object.

92. A processing apparatus comprising:
an irradiation apparatus that emits an energy beam;
a supply apparatus that supplies materials to an irradiation position of the energy beam; and
a receiving apparatus that receives a control signal for controlling at least one of the irradiation apparatus and the supply apparatus to grow a build object toward a first direction that intersects with a first surface of a first object while emitting the energy beam when the build object is formed at the first surface by irradiating the first object with the energy beam.

93. A processing apparatus comprising:
an irradiation apparatus that emits an energy beam;
a supply apparatus that supplies materials to an irradiation position of the energy beam; and
a receiving apparatus that receives a control signal for controlling at least one of the irradiation apparatus and the supply apparatus to grow a build object toward a first direction including a direction component along a vertical direction while emitting the energy beam when the build object is formed at a first surface of a first object by irradiating the first object with the energy beam.

94. A processing apparatus comprising:
an irradiation apparatus that emits an energy beam;
a supply apparatus that supplies materials to an irradiation position of the energy beam; and
a receiving apparatus that receives a control signal for controlling at least one of the irradiation apparatus and the supply apparatus to grow a build object toward a first direction including a direction component that is against gravity while emitting the energy beam when the build object is formed at a first surface of a first object by irradiating the first object with the energy beam.

95. A processing apparatus comprising:
an irradiation apparatus that emits an energy beam;
a supply apparatus that supplies materials to an irradiation position of the energy beam; and
a receiving apparatus that receives a control signal for controlling at least one of the irradiation apparatus and the supply apparatus to change a positional relationship between a first surface of a first object and the irradiation position in a first direction that intersects with the first surface while emitting the energy beam, when a build object is formed at the first surface by irradiating the first object with the energy beam.

96. A processing apparatus comprising:
an irradiation apparatus that emits an energy beam to form a melt pool at an irradiation position of the energy beam;
a supply apparatus that supplies materials to the irradiation position; and
a receiving apparatus that receives a control signal for controlling at least one of the irradiation apparatus and the supply apparatus to change a positional relationship between a first surface of a first object and the melt pool in a first direction that intersects with the first surface while emitting the energy beam, when a build object is formed at the first surface by irradiating the first object with the energy beam.

97. A processing apparatus comprising:
an irradiation apparatus that emits an energy beam;
a supply apparatus that supplies materials in accordance with the irradiation of the energy beam; and
a receiving apparatus that receives a control signal for controlling at least one of the irradiation apparatus and the supply apparatus to change a positional relationship between a first surface of a first object and a supply position of the materials from the supply apparatus in a first direction that intersects with the first surface while emitting the energy beam, when a build object is formed at the first surface by irradiating the first object with the energy beam.

98. A computer program that is executed by a computer for controlling a processing apparatus,
the processing apparatus comprising:
an irradiation apparatus that emits an energy beam; and
a supply apparatus that supplies materials to an irradiation position of the energy beam,
the computer program allowing the computer to execute a process to form a build object by moving the irradiation position from a first position on a first object to a second position that is away from the first object.

99. A computer program that is executed by a computer for controlling a processing apparatus,
the processing apparatus comprising:
an irradiation apparatus that emits an energy beam; and
a supply apparatus that supplies materials to an irradiation position of the energy beam,
the computer program allowing the computer to execute a process to form a first melt pool by irradiating a first object with the energy beam and to form a first build object that protrudes from the first object by supplying the materials to the first melt pool, and to form a second melt pool by irradiating the first build object with the energy beam and to form a second build object that protrudes from the first build object by supplying the materials to the second melt pool.

100. A computer program that is executed by a computer for controlling a processing apparatus,
the processing apparatus comprising:
an irradiation apparatus that emits an energy beam; and
a supply apparatus that supplies materials to an irradiation position of the energy beam,
the computer program allowing the computer to execute a process to form a first melt pool that faces to a first direction side by irradiating a first object with the energy beam and to form a first build object at the first direction side of the first object by supplying the materials to the first melt pool, and to form a second melt pool that faces to the first direction side by irradiating the first build object with the energy beam and form a second build object at the first direction side of the first build object by supplying the materials to the second melt pool.

101. A computer program that is executed by a computer for controlling a processing apparatus,
the processing apparatus comprising:
a supply apparatus that supplies materials; and
an irradiation apparatus that irradiates a supply position of the materials with an energy beam,
the computer program allowing the computer to execute a process to form a build object by moving the supply position from a first position on a first object to a second position that is away from the first object.

102. A computer program that is executed by a computer for controlling a processing apparatus,
the processing apparatus comprising:
an irradiation apparatus that emits an energy beam; and
a supply apparatus that supplies materials to an irradiation position of the energy beam,
the computer program allowing the computer to execute a process to grow a build object toward a first direction that intersects with a first surface of a first object while emitting the energy beam when the build object is formed at the first surface by irradiating the first object with the energy beam.

103. A computer program that is executed by a computer for controlling a processing apparatus,
the processing apparatus comprising:
an irradiation apparatus that emits an energy beam;
a supply apparatus that supplies materials to an irradiation position of the energy beam; and
the computer program allowing the computer to execute a process to grow a build object toward a first direction including a direction component along a vertical direction while emitting the energy beam when the build object is formed at a first surface of a first object by irradiating the first object with the energy beam.

104. A computer program that is executed by a computer for controlling a processing apparatus,
the processing apparatus comprising:
an irradiation apparatus that emits an energy beam; and
a supply apparatus that supplies materials to an irradiation position of the energy beam,
the computer program allowing the computer to execute a process to grow a build object toward a first direction including a direction component that is against gravity while emitting the energy beam when the build object is formed at a first surface of a first object by irradiating the first object with the energy beam.

105. A computer program that is executed by a computer for controlling a processing apparatus,
the processing apparatus comprising:
an irradiation apparatus that emits an energy beam; and
a supply apparatus that supplies materials to an irradiation position of the energy beam,
the computer program allowing the computer to execute a process to change a positional relationship between a first surface of a first object and the irradiation position in a first direction that intersects with the first surface while emitting the energy beam, when a build object is formed at the first surface by irradiating the first object with the energy beam.

106. A computer program that is executed by a computer for controlling a processing apparatus,
the processing apparatus comprising:
an irradiation apparatus that emits an energy beam to form a melt pool at an irradiation position of the energy beam; and
a supply apparatus that supplies materials to the irradiation position,
the computer program allowing the computer to execute a process to change a positional relationship between a first surface of a first object and the melt pool in a first direction that intersects with the first surface while emitting the energy beam, when a build object is formed at the first surface by irradiating the first object with the energy beam.

107. A computer program that is executed by a computer for controlling a processing apparatus,
the processing apparatus comprising:
an irradiation apparatus that emits an energy beam; and
a supply apparatus that supplies materials in accordance with the irradiation of the energy beam,
the computer program allowing the computer to execute a process to change a positional relationship between a first surface of a first object and a supply position of the materials from the supply apparatus in a first direction that intersects with the first surface while emitting the energy beam, when a build object is formed at the first surface by irradiating the first object with the energy beam.

108. A recording medium on which the computer program according to any one of claims 98 to 107 is recorded.

109. A control apparatus that controls a processing apparatus,
the processing apparatus comprising:
an irradiation apparatus that emits an energy beam; and
a supply apparatus that supplies materials to an irradiation position of the energy beam,
the control apparatus executing a process to form a build object by moving the irradiation position from a first position on a first object to a second position that is away from the first object.

110. A control apparatus that controls a processing apparatus,
the processing apparatus comprising:
an irradiation apparatus that emits an energy beam; and
a supply apparatus that supplies materials to an irradiation position of the energy beam,
the control apparatus executing a process to form a first melt pool by irradiating a first object with the energy beam and to form a first build object that protrudes from the first object by supplying the materials to the first melt pool, and to form a second melt pool by irradiating the first build object with the energy beam and to form a second build object that protrudes from the first build object by supplying the materials to the second melt pool.

111. A control apparatus that controls a processing apparatus,
the processing apparatus comprising:
an irradiation apparatus that emits an energy beam; and
a supply apparatus that supplies materials to an irradiation position of the energy beam,
the control apparatus executing a process to form a first melt pool that faces to a first direction side by irradiating a first object with the energy beam and to form a first build object at the first direction side of the first object by supplying the materials to the first melt pool, and to form a second melt pool that faces to the first direction side by irradiating the first build object with the energy beam and form a second build object at the first direction side of the first build object by supplying the materials to the second melt pool.

112. A control apparatus that controls a processing apparatus,
the processing apparatus comprising:
a supply apparatus that supplies materials; and
an irradiation apparatus that irradiates a supply position of the materials with an energy beam,
the control apparatus executing a process to form a build object by moving the supply position from a first position on a first object to a second position that is away from the first object.

113. A control apparatus that controls a processing apparatus,
the processing apparatus comprising:
an irradiation apparatus that emits an energy beam; and
a supply apparatus that supplies materials to an irradiation position of the energy beam,
the control apparatus executing a process to grow a build object toward a first direction that intersects with a first surface of a first object while emitting the energy beam when the build object is formed at the first surface by irradiating the first object with the energy beam.

114. A control apparatus that controls a processing apparatus,
the processing apparatus comprising:
an irradiation apparatus that emits an energy beam;
a supply apparatus that supplies materials to an irradiation position of the energy beam; and
the control apparatus executing a process to grow a build object toward a first direction including a direction component along a vertical direction while emitting the energy beam when the build object is formed at a first surface of a first object by irradiating the first object with the energy beam.

115. A control apparatus that controls a processing apparatus,
the processing apparatus comprising:
an irradiation apparatus that emits an energy beam; and
a supply apparatus that supplies materials to an irradiation position of the energy beam,
the control apparatus executing a process to grow a build object toward a first direction including a direction component that is against gravity while emitting the energy beam when the build object is formed at a first surface of a first object by irradiating the first object with the energy beam.

116. A control apparatus that controls a processing apparatus,
the processing apparatus comprising:
an irradiation apparatus that emits an energy beam; and
a supply apparatus that supplies materials to an irradiation position of the energy beam,
the control apparatus executing a process to change a positional relationship between a first surface of a first object and the irradiation position in a first direction that intersects with the first surface while emitting the energy beam, when a build object is formed at the first surface by irradiating the first object with the energy beam.

117. A control apparatus that controls a processing apparatus,
the processing apparatus comprising:
an irradiation apparatus that emits an energy beam to form a melt pool at an irradiation position of the energy beam; and
a supply apparatus that supplies materials to the irradiation position,
the control apparatus executing a process to change a positional relationship between a first surface of a first object and the melt pool in a first direction that intersects with the first surface while emitting the energy beam, when a build object is formed at the first surface by irradiating the first object with the energy beam.

118. A control apparatus that controls a processing apparatus,
the processing apparatus comprising:
an irradiation apparatus that emits an energy beam; and
a supply apparatus that supplies materials in accordance with the irradiation of the energy beam,
the control apparatus executing a process to change a positional relationship between a first surface of a first object and a supply position of the materials from the supply apparatus in a first direction that intersects with the first surface while emitting the energy beam, when a build object is formed at the first surface by irradiating the first object with the energy beam.
